# EUROPEAN PATENT SPECIFICATION

(11) **EP 2 647 818 B1**
(45) Date of publication and mention of the grant of the patent: **23.08.2017**
(21) Application number: 13162394.4
(22) Date of filing: 04.04.2013
(51) Int. Cl.: F02D 41/06, F02D 41/08, F02D 41/00

(54) **Internal combustion engine and straddle-type vehicle including the same**
Verbrennungsmotor und damit ausgestattetes Sattelfahrzeug
Moteur à combustion interne et véhicule de type à selle comprenant celui-ci

(30) Priority: 06.04.2012 JP 2012087614
(43) Date of publication of application: 09.10.2013
(73) Proprietor: Yamaha Hatsudoki Kabushiki Kaisha, Iwata-shi, Shizuoka 438-8501 (JP)
(72) Inventor: Torigoshi, Masaki, Iwata-shi, Shizuoka 438-8501 (JP)
(74) Representative: Grünecker Patent- und Rechtsanwälte PartG mbB

(56) References cited:
- EP-A1- 2 075 427
- US-A- 4 354 464
- US-A- 5 048 483
- US-A- 6 009 851
- US-A1- 2003 205 215
- "S&S Cycle, Inc. EFI can use 20% Ethanol Fuel ED - Donny Peterson", 11 January 2011 (2011-01-11), DONNY'S UNAUTHORIZED TECHNICAL GUIDE TO HARLEY-DAVIDSON, 1936 TO PRESENT: VOLUME I: THE TWIN CAM, IUNIVERSE, PAGE(S) 320 - 321, XP008175442, ISBN: 1-4502-6772-6 * page 320 - page 321 * * chapter "S&S Cycle, Inc. EFI can use 20% Ethanol Fuel" *

## Description

The present invention relates to an internal combustion engine and a straddle-type vehicle including the internal combustion engines. The prior art document US 6,009,851 discloses an internal combustion engine comprising an intake passage through which air is introduced into a combustion chamber. The intake passage comprises a main passage in which a main valve is provided. A first bypass passage through which regions of the main passage is located upstream and downstream of the main valve are communicated with each other. The intake passage further comprises a second bypass passage through which the regions of the main passage located upstream and downstream of the main valve are communicated with each other. The internal combustion engine further comprises a valve device capable of opening and closing the first and second bypass passages. Both of the first and second bypass passages are closed by the valve device before startup of the internal combustion engine. Each of the first and second bypass passages can be opened by the valve device when the internal combustion engine is idling and a temperature of the internal combustion engine is lower than a given temperature.

A conventional internal combustion engine includes an intake passage through which air is introduced into a combustion chamber, and a throttle valve that adjusts the amount of intake air is provided inside the intake passage. For example, in a technique disclosed in JP-A-2009-74367, a bypass passage is provided that allows communication between upstream and downstream regions of an intake passage, and a valve is provided in the bypass passage, thus enabling more favorable adjustment of the amount of air to be introduced into a combustion chamber.

At startup of an internal combustion engine (during cranking), startup performance is enhanced by reducing the amount of intake air. The amount of intake air during cold idling of the internal combustion engine (i.e., when the internal combustion engine is idling and the temperature thereof is lower than a given temperature) has to be larger than the amount of intake air at startup. On the other hand, the amount of intake air during warm idling of the internal combustion engine (i.e., when the internal combustion engine is idling and the temperature thereof is equal to or higher than the given temperature) has to be larger than the amount of intake air at startup but smaller than the amount of intake air during cold idling. The amount of intake air that is larger than the amount of intake air at startup but smaller than the amount of intake air during cold idling will hereinafter be referred to as an "intermediate amount of air". When a solenoid valve is used as the above-mentioned valve, the amount of intake air is adjusted by "duty control" in which the valve is opened during cold idling so as to increase the amount of intake air, and the valve is opened and closed repeatedly at regular intervals during warm idling.

However, when once the internal combustion engine is started up, the duration of warm idling will be longer than the duration of cold idling, and therefore, the duration of a valve opening/closing operation will be long, which will disadvantageously reduce valve durability. Furthermore, the valve opening/closing operation unfortunately causes noise every time the internal combustion engine enters a warm idling state. Note that when a valve including a stepping motor is used so as to obtain an intermediate amount of air, responsiveness of the valve opening/closing operation is low, which disadvantageously makes it impossible to adjust the amount of air with high responsiveness. The use of a linear solenoid, for example, makes it possible to easily adjust the amount of air to an intermediate amount of air, but unfortunately increases cost because the linear solenoid itself is expensive.

Accordingly, it is an object of the present invention to provide an internal combustion engine and a straddle-type vehicle including the internal combustion engine that can adjust the amount of intake air without using any expensive valve, for example, improves valve durability, and prevents abnormal noise during valve opening/closing.

According to the present invention said object is solved by an internal combustion engine having the features of independent claim 1. Preferred embodiments are laid down in the dependent claims. Moreover, said object is solved by a straddle-type vehicle having the features of claim 9.

An internal combustion engine according to a preferred embodiment of the present teaching includes an intake passage that includes: a main passage in which a main valve is provided; and a first bypass passage through which regions of the main passage located upstream and downstream of the main valve are communicated with each other. The intake passage further includes a second bypass passage through which the regions of the main passage located upstream and downstream of the main valve are communicated with each other. The internal combustion engine further includes a valve device capable of opening and closing the first and second bypass passages. Both of the first and second bypass passages are closed or at least intermittently opened by the valve device before startup of the internal combustion engine. Each of the first and second bypass passages is at least intermittently opened by the valve device when the internal combustion engine is idling and a temperature of the internal combustion engine is lower than a given temperature. One of the first and second bypass passages is closed and the other one of the first and second bypass passages is opened by the valve device when the internal combustion engine is idling and the temperature of the internal combustion engine is equal to or higher than the given temperature. The order of amounts of intake air per unit time, from lowest to highest, is the amount of intake air per unit time before startup of the internal combustion engine, the amount of intake air per unit time when the internal combustion engine is idling and the temperature of the internal combustion engine is equal to or higher than the given temperature, and the amount of intake air per unit time when the internal combustion engine is idling and the temperature of the internal combustion engine is lower than the given temperature.

The internal combustion engine according to the preferred embodiment of the present teaching includes the second bypass passage in addition to the main passage and the first bypass passage, and also includes the valve device capable of opening and closing the first and second bypass passages. The first and second bypass passages are closed or at least intermittently opened before startup of the internal combustion engine, so that the amount of intake air is minimized. Each of the first and second bypass passages is at least intermittently opened during cold idling in which the internal combustion engine is idling and the temperature thereof is lower than the given temperature, so that the amount of intake air is maximized. One of the first and second bypass passages is opened and the other one of the first and second bypass passages is closed during warm idling in which the internal combustion engine is idling and the temperature thereof is equal to or higher than the given temperature, so that the amount of intake air is kept at an intermediate level without performing "duty control". As a result, the service life of the valve device is further extended, and abnormal noise is prevented during warm idling.

According to one preferred embodiment of the present teaching, a portion of the first bypass passage and a portion of the second bypass passage preferably constitute a common passage. The first bypass passage preferably includes a first independent passage continuous with the common passage. The second bypass passage preferably includes a second independent passage continuous with the common passage. A first passage port is preferably provided between the common passage and the first independent passage, a second passage port is preferably provided between the common passage and the second independent passage, and a third passage port is preferably provided between the common passage and the main passage. The valve device preferably includes a common valve capable of opening and closing the first passage port and the third passage port. The third passage port is preferably closed or at least intermittently opened by the common valve before startup of the internal combustion engine. Each of the first passage port and the third passage port is preferably opened and closed repeatedly by the common valve when the internal combustion engine is idling and the temperature of the internal combustion engine is lower than the given temperature. The first passage port is preferably closed and the third passage port is preferably opened by the common valve when the internal combustion engine is idling and the temperature of the internal combustion engine is equal to or higher than the given temperature.

Since the first and second bypass passages can be opened and closed by the single common valve in this manner, cost reduction is achieved and the control is facilitated.

According to one preferred embodiment of the present teaching, the common valve preferably includes a solenoid valve.

A solenoid valve is operable at high speed and is relatively inexpensive. Thus, the valve that is quickly operable can be relatively inexpensively provided. Accordingly, the internal combustion engine capable of easily adjusting the amount of intake air can be relatively inexpensively fabricated.

According to one preferred embodiment of the present teaching, the common valve preferably includes a solenoid valve operable in multiple steps.

Thus, the amount of intake air can be easily adjusted with the use of a solenoid valve operable in multiple steps.

According to one preferred embodiment of the present teaching, an amount of air flowing through the first bypass passage per unit time and an amount of air flowing through the second bypass passage per unit time are preferably different from each other.

Thus, the amount of intake air during warm idling can be set to a desired amount.

According to one preferred embodiment of the present teaching, one of the first and second bypass passages, which is opened when the internal combustion engine is idling and the temperature of the internal combustion engine is equal to or higher than the given temperature, is preferably provided with a flow restrictor capable of adjusting an amount of air flowing through the one of the first and second bypass passages.

Thus, the amount of intake air during warm idling can be more minutely set.

According to one preferred embodiment of the present teaching, the internal combustion engine preferably further includes a throttle body that constitutes the main passage in which the main valve is provided. The throttle body and at least one of the first and second bypass passages are preferably separate components.

Thus, a conventional product can be utilized as the throttle body used in the internal combustion engine, and therefore, cost reduction can be achieved.

According to one preferred embodiment of the present teaching, a fuel used in the internal combustion engine preferably contains alcohol.

The alcohol-containing fuel, i.e., the fuel partially containing alcohol or the fuel containing alcohol in its entirety, has low volatility and is resistant to vaporization, and therefore, the above-described effects are more pronounced.

According to one preferred embodiment of the present teaching, the internal combustion engine preferably is a single-cylinder internal combustion engine.

As compared with a multi-cylinder internal combustion engine in which air is supplied to a plurality of combustion chambers from one intake passage, the single-cylinder internal combustion engine can control the amount of intake air with high accuracy by changing valve opening(s).

A straddle-type vehicle according to one preferred embodiment of the present teaching includes the internal combustion engine according to one of the preferred embodiments of the present teaching described above.

According to the preferred embodiment of the present teaching, the straddle-type vehicle that achieves the above-described advantages can be fabricated.

### ADVANTAGEOUS EFFECTS OF INVENTION

Various preferred embodiments of the present teaching can provide a new technique that can adjust the amount of intake air without using any expensive valve, for example, improves valve durability, and prevents abnormal noise during valve opening/closing.

### BRIEF DESCRIPTION OF DRAWINGS

FIG. 1 is a side view illustrating a motorcycle according to a preferred embodiment of the present teaching.
FIG. 2 is a schematic diagram of an engine and a controller.
FIG. 3A is a schematic diagram of a valve device.
FIG. 3B is a schematic diagram of the valve.
FIG. 4 is a block diagram for control of an opening of a first valve according to the preferred embodiment of the present teaching.
FIG. 5A is a time chart of first independent control.
FIG. 5B is a time chart of second independent control.
FIG. 5C is a time chart of third independent control.
FIG. 5D is a time chart of fourth independent control.
FIG. 6A is a time chart of first startup control.
FIG. 6B is a time chart of second startup control.
FIG. 6C is a time chart of third startup control.
FIG. 6D is a time chart of fourth startup control.
FIG. 7 is a flow chart of the startup control including determination steps.
FIG. 8 is a time chart of the startup control including determination steps.
FIG. 9A is a schematic diagram illustrating a state of the valve device before startup of the engine.
FIG. 9B is a schematic diagram illustrating a state of the valve device during cold idling of the engine.
FIG. 9C is a schematic diagram illustrating a state of the valve device during warm idling of the engine.
FIG. 10 is a graph illustrating time-varying changes in the amount of intake air before and after startup of the engine according to the preferred embodiment of the present teaching.
FIG. 11A is a schematic diagram of an alternative valve device.
FIG. 11B is a schematic diagram of the alternative valve device.
FIG. 11C is a schematic diagram the alternative valve device.
FIG. 12A is a schematic diagram illustrating a state of a valve device before startup of an engine according to a variation of the teaching **of the independent claim 1.**
FIG. 12B is a schematic diagram illustrating a state of the valve device during cold idling of the engine according to the variation of the present teaching.
FIG. 12C is a schematic diagram illustrating a state of the valve device during warm idling of the engine according to the variation of the present teaching.
FIG. 13A is a schematic diagram illustrating a state of a valve device before startup of an engine according to an alternative variation of the present teaching.
FIG. 13B is a schematic diagram illustrating a state of the valve device during cold idling of the engine according to the alternative variation of the teaching **of the independent claim 1.**
FIG. 13C is a schematic diagram illustrating a state of the valve device during warm idling of the engine according to the alternative variation of the present teaching.
FIG. 14 is a graph illustrating a relationship between an engine temperature and an ethanol concentration.

### DESCRIPTION OF EMBODIMENTS

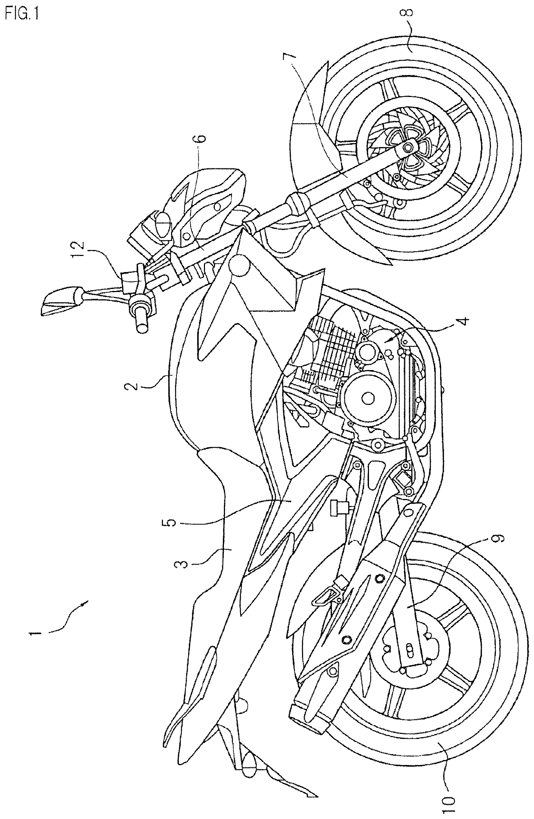

Hereinafter, preferred embodiments of the present teaching will be described. As illustrated in FIG. 1, a straddle-type vehicle according to the present preferred embodiment is a motorcycle 1. However, the motorcycle 1 is not limited to any particular type of motorcycle, but may be any motorcycle such as a "scooter type", "moped type", "off-road type" or "street type" motorcycle. The straddle-type vehicle according to the present teaching is not limited to a motorcycle, but may be an ATV (All Terrain Vehicle), for example. Note that the term "straddle-type vehicle" refers to a vehicle that a rider straddles when getting on the vehicle.

Examples of fuels usable for the motorcycle 1 include gasoline, alcohol such as ethanol, and a fuel mixture of gasoline and alcohol. The following description will be made on the assumption that ethanol having low volatility at low temperature or a fuel mixture of ethanol and gasoline, for example, is used as a fuel in the present preferred embodiment. However, the fuel used in the present preferred embodiment is not limited to an alcohol-containing fuel.

As illustrated in FIG. 1, the motorcycle 1 preferably includes: a fuel tank 2; a seat 3 on which a rider sits while riding on the motorcycle 1; an engine 4 serving as an internal combustion engine; and a body frame 5 that supports these components. A head pipe 6 is provided forward of the body frame 5 and supports a steering shaft (not illustrated). A handlebar 12 is provided at an upper portion of the steering shaft. A front fork 7 is provided at a lower portion of the steering shaft. A front wheel 8 is rotatably supported at a lower end portion of the front fork 7. The body frame 5 supports a swing arm 9 in such a manner that the swing arm 9 is swingable. A rear wheel 10 is rotatably supported at a rear end portion of the swing arm 9.

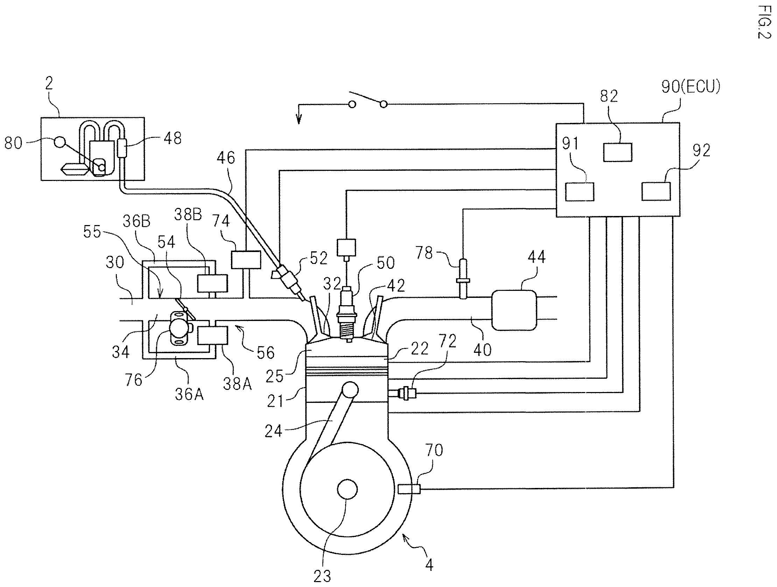

As illustrated in FIG. 2, the engine 4 preferably includes: a cylinder 21; a piston 22 that reciprocates inside the cylinder 21; a crankshaft 23; and a connecting rod 24 through which the piston 22 and the crankshaft 23 are connected to each other. The engine 4 is a four-stroke, single-cylinder engine that repeats cycles each including intake, compression, expansion and exhaust strokes. It is to be noted that the engine 4 is not limited to a single-cylinder engine but may be a multi-cylinder engine. The engine 4 preferably further includes: a fuel injection valve 52 serving as a fuel injection device through which a fuel is injected; and an ignition device 50 that ignites the fuel inside a combustion chamber 25. The engine 4 is provided with: a rotational speed sensor 70 that detects a rotational speed of the crankshaft 23; and a temperature sensor 72 that detects a temperature of the engine 4. Note that the term "rotational speed of the crankshaft 23" refers to a rotational frequency of the crankshaft 23 per unit time. Hereinafter, the rotational speed of the crankshaft 23 will simply be referred to as the rotational speed of the engine 4. The temperature sensor 72 may detect a temperature of a portion of the engine 4 (e.g., the cylinder 21), or may detect a temperature of cooling water when the engine 4 is a water-cooled engine. In other words, the temperature sensor 72 may directly detect the temperature of the engine 4, or may indirectly detect the temperature of the engine 4 by detecting the temperature of cooling water, for example.

The engine 4 preferably further includes: an intake passage 30 through which air is introduced into the combustion chamber 25; an intake valve 32 that opens and closes communication between the intake passage 30 and the combustion chamber 25; an exhaust passage 40 through which exhaust gas inside the combustion chamber 25 is discharged; and an exhaust valve 42 that opens and closes communication between the combustion chamber 25 and the exhaust passage 40. The fuel injection valve 52 is disposed so as to inject the fuel into the intake passage 30. It is also contemplated that the fuel injection valve 52 may directly inject the fuel into the combustion chamber 25. Alternatively, the engine 4 may include two types of fuel injection valves, one of which injects the fuel into the intake passage 30 and the other one of which injects the fuel into the combustion chamber 25. The fuel injection device that injects the fuel into the intake passage 30 is not limited to the fuel injection valve 52 but may be a carburetor.

The exhaust passage 40 is provided with a catalyst 44. The exhaust passage 40 is further provided with an 02 sensor 78 that serves as an air-fuel ratio sensor and detects oxygen contained in the exhaust gas. The air-fuel ratio sensor may be a sensor at least capable of detecting whether an air-fuel ratio is in a "rich" region or a "lean" region. Therefore, the 02 sensor 78 can detect whether the air-fuel ratio is in the rich region or lean region. Alternatively, a linear A sensor may naturally be used as the air-fuel ratio sensor.

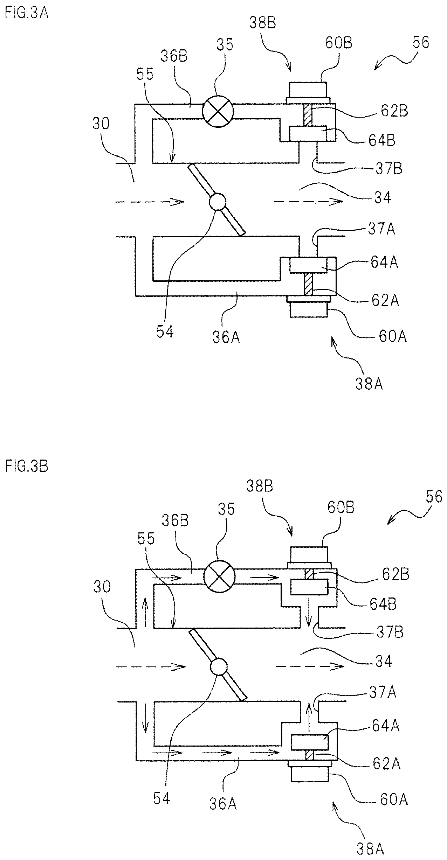

The intake passage 30 is provided with a pressure sensor 74 that detects an intake pipe pressure which is an internal pressure of the intake passage 30. The intake passage 30 preferably includes: a main passage 34 in which a throttle valve 54 serving as a main valve is contained; a first bypass passage 36A through which regions of the main passage 34 located upstream and downstream of the throttle valve 54 are communicated with each other; and a second bypass passage 36B through which the regions of the main passage 34 located upstream and downstream of the throttle valve 54 are communicated with each other. The first and second bypass passages 36A and 36B are mutually independent bypass passages. The main passage 34, the first bypass passage 36A and the second bypass passage 36B are arranged in parallel to each other. As illustrated in FIG. 3A, a first passage port 37A is provided between the first bypass passage 36A and the main passage 34. A second passage port 37B is provided between the second bypass passage 36B and the main passage 34. The first and second bypass passages 36A and 36B and a throttle body 55 that constitutes the main passage 34 are separate components, but the first and second bypass passages 36A and 36B may alternatively be integral with the throttle body 55. It is also contemplated that either one of the first and second bypass passages 36A and 36B may be integral with the throttle body 55, and the other one of the first and second bypass passages 36A and 36B and the throttle body 55 may be separate components.

The second bypass passage 36B is provided with a flow restrictor 35 capable of adjusting the amount of air flowing through the second bypass passage 36B. The flow restrictor 35 is a valve whose opening is adjustable by a pilot screw, for example. Note that the flow restrictor 35 does not necessarily have to be provided in the second bypass passage 36B. Alternatively, the flow restrictor 35 may be provided in the first bypass passage 36A, or may be provided in both of the first and second bypass passages 36A and 36B. Thus, adjustment of an air flow rate can be further facilitated.

As illustrated in FIG. 2, the throttle valve 54 is provided with a throttle position sensor 76 that detects an opening of the throttle valve 54. The intake passage 30 preferably further includes a valve device 56 capable of opening and closing the first and second bypass passages 36A and 36B.

A specific structure of the valve device 56 is not limited to any particular structure. The valve device 56 may preferably have the following structure, for example.

As illustrated in FIGS. 3A and 3B, the valve device 56 preferably includes: a first valve 38A provided in the first bypass passage 36A so as to serve as a bypass valve; and a second valve 38B provided in the second bypass passage 36B so as to serve as a bypass valve.

The first valve 38A is provided in a downstream region of the first bypass passage 36A. By adjusting an opening of the first valve 38A, a flow passage cross-sectional area of the first bypass passage 36A can be changed. Thus, the amount of air flowing through the first bypass passage 36A can be controlled. The first valve 38A preferably includes a solenoid valve that includes: a solenoid 60A; a shaft 62A driven by the solenoid 60A so as to be moved in a vertical direction in FIGS. 3A and 3B; and a valve body 64A attached to a tip of the shaft 62A.

In the first valve 38A, the direction of movement of the shaft 62A changes in response to whether or not power is supplied to the solenoid 60A. Upon movement of the shaft 62A in a direction away from the main passage 34 (i.e., a downward direction in FIGS. 3A and 3B), the valve body 64A also moves in the same direction to open the first passage port 37A. Thus, the first bypass passage 36A is opened (see FIG. 3B). Conversely, upon movement of the shaft 62A in a direction toward the main passage 34 (i.e., an upward direction in FIGS. 3A and 3B) by the solenoid 60A, the valve body 64A also moves in the same direction to close the first passage port 37A (see FIG. 3A). Thus, the first bypass passage 36A is closed. The first bypass passage 36A is closed when power is not supplied to the solenoid 60A. This state will be referred to as a "closed state". Conversely, the first bypass passage 36A is opened when power is supplied to the solenoid 60A. This state will be referred to as an "open state". Note that the first valve 38A may be adapted so that the first valve 38A enters the closed state when power is supplied to the solenoid 60A, and enters the open state when power is not supplied to the solenoid 60A. The position of the first valve 38A in the first bypass passage 36A is not limited to any particular position. For example, the first valve 38A may be provided in an upstream region of the first bypass passage 36A.

The second valve 38B is provided in a downstream region of the second bypass passage 36B. By adjusting an opening of the second valve 38B, a flow passage cross-sectional area of the second bypass passage 36B can be changed. Thus, the amount of air flowing through the second bypass passage 36B can be controlled. The second valve 38B preferably includes a solenoid valve that includes: a solenoid 60B; a shaft 62B driven by the solenoid 60B so as to be moved in the vertical direction in FIGS. 3A and 3B; and a valve body 64B attached to a tip of the shaft 62B.

In the second valve 38B, the direction of movement of the shaft 62B changes in response to whether or not power is supplied to the solenoid 60B. Upon movement of the shaft 62B in a direction away from the main passage 34 (i.e., an upward direction in FIGS. 3A and 3B), the valve body 64B also moves in the same direction to open the second passage port 37B. Thus, the second bypass passage 36B is opened (see FIG. 3B). Conversely, upon movement of the shaft 62B in a direction toward the main passage 34 (i.e., a downward direction in FIGS. 3A and 3B) by the solenoid 60B, the valve body 64B also moves in the same direction to close the second passage port 37B. Thus, the second bypass passage 36B is closed (see FIG. 3A). The second bypass passage 36B is opened when power is not supplied to the solenoid 60B. This state will be referred to as an "open state". Conversely, the second bypass passage 36B is closed when power is supplied to the solenoid 60B. This state will be referred to as a "closed state". Note that the second valve 38B may be adapted so that the second valve 38B enters the open state when power is supplied to the solenoid 60B, and enters the closed state when power is not supplied to the solenoid 60B. The position of the second valve 38B in the second bypass passage 36B is not limited to any particular position. For example, the second valve 38B may be provided in an upstream region of the second bypass passage 36B.

The flow rate of air flowing through the first bypass passage 36A per unit time when the first bypass passage 36A is opened, and the flow rate of air flowing through the second bypass passage 36B per unit time when the second bypass passage 36B is opened are not limited to any particular flow rates. However, when these flow rates are different from each other, the amount of air (amount of intake air) flowing through the intake passage 30 can be extensively adjusted.

As illustrated in FIG. 2, the fuel tank 2 and the fuel injection valve 52 are connected to each other through a fuel pipe 46. A fuel pump 48 and a fuel sensor 80 are provided inside the fuel tank 2. The fuel pump 48 supplies the fuel to the fuel pipe 46. The fuel sensor 80 detects the amount of the fuel inside the fuel tank 2. A specific configuration of the fuel sensor 80 is not limited to any particular configuration. For example, a known sensor such as a level sensor may suitably be used as the fuel sensor 80. Note that in the motorcycle 1, a percentage of ethanol mixed in the fuel is estimated on the basis of a value detected by the 02 sensor 78, and therefore, a sensor that detects an ethanol concentration in the fuel inside the fuel tank 2 is not provided. However, a sensor that detects an ethanol concentration in the fuel inside the fuel tank 2 may naturally be provided so as to directly detect the percentage of ethanol mixed in the fuel. Although a fuel pressure regulator (not illustrated) that adjusts a fuel pressure is disposed inside the fuel tank 2, the fuel pressure regulator may alternatively be disposed outside the fuel tank 2. For example, the fuel pressure regulator may be disposed between the fuel pipe 46 and the fuel injection valve 52. In that case, the fuel pressure regulator is connected to the fuel tank 2 via a return pipe (not illustrated).

The motorcycle 1 preferably includes an ECU (Electric Control Unit) 90 serving as a controller that controls the engine 4. The ECU 90 preferably includes: a computing section 91 that performs various computations for control described later; and a storage section 92 that stores a control program and/or various pieces of information for performing the control described later. The computing section 91 and the storage section 92 are not limited to any particular hardware configurations. For example, a CPU may suitably be used as the computing section 91, and a memory such as a ROM or a RAM may suitably be used as the storage section 92. The storage section 92 preferably includes a nonvolatile memory.

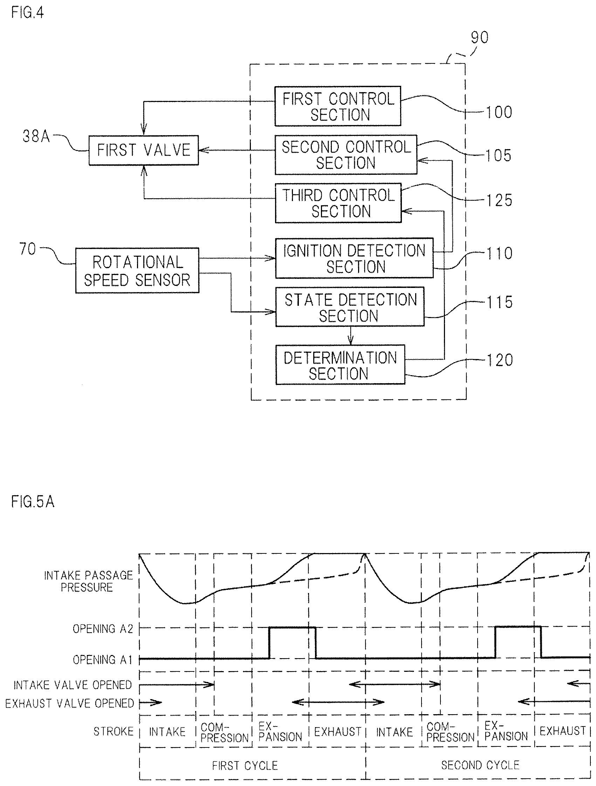

As illustrated in FIG. 4, the ECU 90 preferably further includes: a first control section 100 that keeps the opening of the first valve 38A at an opening equal to or smaller than a first opening; a second control section 105 that changes the opening of the first valve 38A to a second opening greater than the first opening; an ignition detection section 110 that detects fuel ignition; a state detection section 115; a determination section 120; and a third control section 125. The first, second and third control sections 100, 105 and 125 can distinguish among the intake, compression, expansion and exhaust strokes on the basis of a signal from the rotational speed sensor 70. Although the first, second and third control sections 100, 105 and 125 control the first valve 38A provided in the first bypass passage 36A, an object to be controlled by the first, second and third control sections 100, 105 and 125 is not limited to the first valve 38A. For example, the first, second and third control sections 100, 105 and 125 may control the throttle valve 54 or the second valve 38B. It is also contemplated that the first, second and third control sections 100, 105 and 125 may control two or all of the valves 38A, 38B and 54.

The second control section 105 can change the opening of the first valve 38A to the second opening greater than the first opening, keep the opening of the first valve 38A at the second opening, and change the opening of the first valve 38A from the second opening to the opening equal to or smaller than the first opening.

The ignition detection section 110 detects fuel ignition in a first cycle at startup of the engine 4. The ignition detection section 110 preferably detects fuel ignition in the expansion stroke of the first cycle. The ignition detection section 110 detects fuel ignition on the basis of a rotational speed of the engine 4 detected by the rotational speed sensor 70. For example, when the rotational speed of the engine 4 is equal to or higher than a given value, the ignition detection section 110 determines that the fuel is ignited, and when the rotational speed of the engine 4 is lower than the given value, the ignition detection section 110 determines that the fuel is not ignited.

The state detection section 115 detects a state of the engine 4. Usable parameters indicative of the state of the engine 4 include various parameters such as the rotational speed of the engine 4, for example. The state detection section 115 preferably detects the state of the engine 4 in the expansion stroke of a second cycle. The state detection section 115 detects the state of the engine 4 on the basis of the rotational speed of the engine 4 detected by the rotational speed sensor 70.

The determination section 120 determines whether or not the state of the engine 4 detected by the state detection section 115 is a given state. The determination section 120 determines whether or not the state of the engine 4 is the given state on the basis of whether or not the rotational speed of the engine 4 is equal to or higher than a given value, for example. When the rotational speed of the engine 4 is equal to or higher than the given value, the determination section 120 determines that the engine 4 is started up, and when the rotational speed of the engine 4 is lower than the given value, the determination section 120 determines that the engine 4 is not started up.

Upon determination by the determination section 120 that the state of the engine 4 is not the given state (i.e., upon determination that the engine 4 is not started up), the third control section 125 keeps the opening of the first valve 38A at the opening equal to or smaller than the first opening, and performs the first and second cycles again. However, upon determination by the determination section 120 that the state of the engine 4 is the given state (i.e., upon determination that the engine 4 is started up), the third control section 125 keeps the opening of the first valve 38A at an opening greater than the first opening (e.g., keeps the opening of the first valve 38A at the second opening or gradually increases the opening of the first valve 38A from the second opening) in a cycle subsequent to the second cycle. As a result, the engine 4, which has been started up, makes a smooth transition to an idling state.

Upon determination by the determination section 120 that the state of the engine 4 is not the given state (i.e., upon determination that the rotational speed of the engine 4 is lower than the given value due to misfiring, for example) in the cycle subsequent to the second cycle in which the engine 4 has been started up, the third control section 125 performs the first and second cycles again. However, upon determination by the determination section 120 that the state of the engine 4 is the given state (i.e., upon determination that the rotational speed of the engine 4 is kept at or above the given value) in the cycle subsequent to the second cycle in which the engine 4 has been started up, the third control section 125 keeps the opening of the first valve 38A at the opening greater than the first opening.

The ECU 90 preferably further includes a mixed percentage determining section 82 (see FIG. 2) that determines the percentage of ethanol mixed in the fuel. As mentioned above, the percentage of the mixed ethanol is estimated on the basis of the value detected by the O2 sensor 78. The mixed percentage determining section 82 makes this estimation to determine the percentage of the mixed ethanol. Since a method for estimating the percentage of mixed ethanol on the basis of a value detected by an 02 sensor is well known, description thereof will be omitted. Note that when a sensor that detects an ethanol concentration in the fuel is provided, this sensor functions as the mixed percentage determining section 82.

The ECU 90 is connected with the above-described sensors so that a detection signal is transmitted to the ECU 90 from each sensor. Specifically, the ECU 90 is connected with the rotational speed sensor 70, the temperature sensor 72, the pressure sensor 74, the throttle position sensor 76, the 02 sensor 78 and the fuel sensor 80. When a sensor that detects an ethanol concentration in the fuel is provided, this sensor is also connected to the ECU 90.

The use of the valve device 56 having the above-described structure enables the amount of intake air and the amount of burnt gas to be controlled independently. Hereinafter, control by which the amount of intake air and the amount of burnt gas can be adjusted independently will be referred to as "independent control". The use of the valve device 56 also enables startup control of the engine 4. The use of the valve device 56 further enables control of the amount of intake air at startup of the engine 4, during cold idling (i.e., when the engine 4 is idling and the temperature thereof is lower than a given temperature), and during warm idling (i.e., when the engine 4 is idling and the temperature thereof is equal to or higher than the given temperature).

### Independent Control

First, the independent control of the engine 4 will be described. The independent control is performed to allow the engine 4 to operate efficiently at startup, during idling or during low-load running, for example. The independent control is performed by the ECU 90.

In the engine 4 according to the present preferred embodiment, at startup, during idling and during low-load running, an "overlap period" in which both of the intake valve 32 and the exhaust valve 42 are opened exists in a portion of the intake stroke and/or a portion of the exhaust stroke of a given cycle.

In the present preferred embodiment, as illustrated in FIG. 5A, the exhaust valve 42 (see FIG. 2) is opened immediately before the end of the expansion stroke of a given cycle (e.g., the first cycle). The exhaust valve 42 is always opened during the exhaust stroke of the given cycle. While the exhaust valve 42 is opened, exhaust gas inside the combustion chamber 25 is discharged to the exhaust passage 40. The exhaust valve 42 is opened until immediately after the start of the intake stroke of the cycle (e.g., the second cycle) subsequent to the given cycle, and is then closed.

Meanwhile, as illustrated in FIG. 5A, the intake valve 32 (see FIG. 2) is opened immediately before the end of the exhaust stroke of a given cycle (e.g., the first cycle). The intake valve 32 is always opened during the intake stroke of the cycle (e.g., the second cycle) subsequent to the given cycle. While the intake valve 32 is opened, air and fuel are introduced into the combustion chamber 25 through the intake passage 30. The intake valve 32 is opened until immediately after the start of the compression stroke of the cycle subsequent to the given cycle, and is then closed.

The independent control can be performed by using the first valve 38A and/or the second valve 38B. Hereinafter, the independent control performed by using the first valve 38A will be described. Each opening in FIGS. 5A to 5D, which will be described below, refers to the opening of the first valve 38A.

FIG. 5A is a time chart of first independent control. Note that in the following preferred embodiments, the first cycle refers to a given cycle unless otherwise specified. For example, the first cycle may be an initial cycle immediately after startup or may be a given cycle during idling or during low-load running. In the following description made with reference to the time charts, the throttle valve 54 and the second valve 38B are each maintained at a given opening, and the opening of the first valve 38A is controlled by the first, second and third control sections 100, 105 and 125. In the time charts, the intake pipe pressure indicated by the solid line is obtained when the opening of the first valve 38A is controlled, and the intake pipe pressure indicated by the dotted line is obtained when the opening of the first valve 38A is kept at an opening A1 without being controlled.

As illustrated in FIG. 5A, the first control section 100 keeps the opening of the first valve 38A at the opening A1 equal to or smaller than the first opening in the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle. Note that the first opening is an opening which can serve as a limit value for reduction of the intake pipe pressure. The first opening may be set uniquely in advance on the basis of a simulation, an experiment or the like performed in accordance with specifications of the engine 4, for example. The first opening is not limited to any particular value, but may be set at any appropriate value. The first opening may be zero, for example. The same goes for each of the following preferred embodiments of the present teaching.

The second control section 105 changes the opening of the first valve 38A when the intake valve 32 is closed. Specifically, the second control section 105 changes the opening of the first valve 38A to an opening A2 (second opening) greater than the first opening in the expansion stroke of the first cycle, keeps the opening of the first valve 38A at the opening A2 until immediately after the start of the exhaust stroke of the first stroke, and then returns the opening of the first valve 38A to the opening A1 in the exhaust stroke of the first stroke. Hence, the amount of air sucked into the intake passage 30 is increased, thus increasing the intake pipe pressure and inhibiting burnt gas from flowing backward to inside of the intake passage 30. In other words, the amount of burnt gas can be controlled. Note that the opening of the first valve 38A may be gradually increased after having been changed to the opening A2.

Since the second control section 105 returns the opening of the first valve 38A to the opening A1 before the end of the exhaust stroke of the first cycle, the intake pipe pressure is kept low in the intake stroke of the second cycle. Therefore, vaporization of the fuel is promoted and the fuel is increased in concentration, thus facilitating fuel ignition in the second cycle. In the second cycle, the first and second control sections 100 and 105 control the opening of the first valve 38A similarly to the first cycle, so that the amount of burnt gas can be controlled independently from the amount of intake air. As a result, fuel ignition is facilitated in a third cycle subsequent to the second cycle.

Note that in the first independent control, the opening of the first valve 38A may be changed to the second opening A2 in any one of the compression, expansion and exhaust strokes of the first cycle, and the opening of the first valve 38A may be returned to the opening A1 equal to or smaller than the first opening before the end of the exhaust stroke of the first cycle. With this control, advantages similar to those described above are achieved.

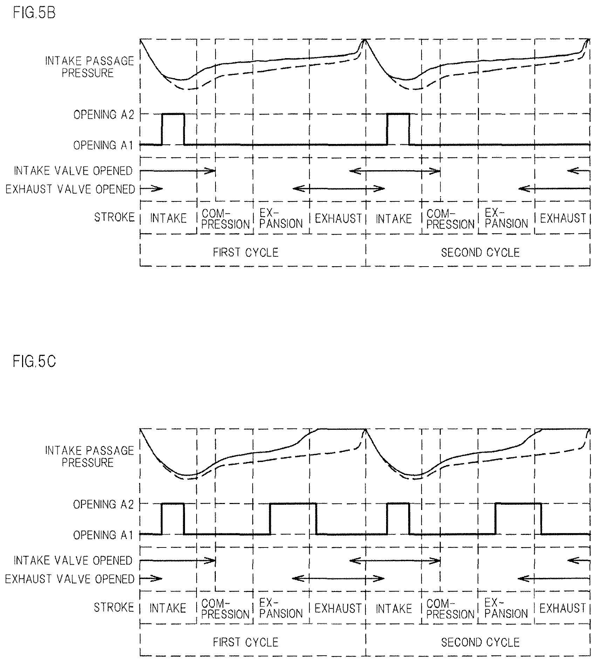

FIG. 5B is a time chart of second independent control.

As illustrated in FIG. 5B, the first control section 100 keeps the opening of the first valve 38A at the opening A1 in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A when the intake valve 32 is opened. Specifically, the second control section 105 changes the opening of the first valve 38A to the opening A2 in the intake stroke of the first cycle, and then returns the opening of the first valve 38A to the opening A1 in the intake stroke. Thus, the amount of air sucked into the intake passage 30 can be increased.

Since the second control section 105 returns the opening of the first valve 38A to the opening A1 in the intake stroke of the first cycle, the intake pipe pressure can be kept low until the intake stroke of the second cycle. Thus, in the intake stroke of the second cycle, the amount of backflow of burnt gas is increased, and pumping loss can be reduced. In the second cycle, the first and second control sections 100 and 105 control the opening of the first valve 38A similarly to the first cycle, so that the amount of intake air can be controlled. As a result, the amount of intake air can be increased, and in addition, pumping loss can be reduced.

Note that in the second independent control, the opening of the first valve 38A may be changed to the second opening A2 in the intake stroke of the first cycle, and the opening of the first valve 38A may be returned to the opening A1 equal to or smaller than the first opening before the end of the compression stroke of the first cycle. With this control, advantages similar to those described above are achieved.

FIG. 5C is a time chart of third independent control.

As illustrated in FIG. 5C, the first control section 100 keeps the opening of the first valve 38A at the opening A1 in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A when the intake valve 32 is opened. Specifically, the second control section 105 changes the opening of the first valve 38A to the opening A2 in the intake stroke of the first cycle, and then returns the opening of the first valve 38A to the opening A1 in the intake stroke. Thus, the amount of air sucked into the intake passage 30 can be increased.

Then, the second control section 105 changes the opening of the first valve 38A when the intake valve 32 is closed. Specifically, the second control section 105 changes the opening of the first valve 38A to the opening A2 in the expansion stroke of the first cycle, keeps the opening of the first valve 38A at the opening A2 until immediately after the start of the exhaust stroke of the first stroke, and then returns the opening of the first valve 38A to the opening A1 in the exhaust stroke of the first cycle. As a result, the amount of air sucked into the intake passage 30 is increased, thus increasing the intake pipe pressure and inhibiting burnt gas from flowing backward to the inside of the intake passage 30.

Since the second control section 105 returns the opening of the first valve 38A to the opening A1 before the end of the exhaust stroke of the first cycle, the intake pipe pressure is kept low in the intake stroke of the second cycle. Thus, fuel ignition is facilitated in the second cycle. In the second cycle, the first and second control sections 100 and 105 control the opening of the first valve 38A similarly to the first cycle, so that the amount of intake air and the amount of burnt gas can be controlled independently. As a result, an increase in the amount of intake air and enhancement of fuel ignition performance are achieved.

Note that in the third independent control, the opening of the first valve 38A may be changed to the second opening A2 in the intake stroke of the first cycle, and then the opening of the first valve 38A may be returned to the opening A1 equal to or smaller than the first opening before the end of the compression stroke of the first cycle. Subsequently, the opening of the first valve 38A may be increased to the opening greater than the first opening in any one of the compression, expansion and exhaust strokes of the first cycle, and then the opening of the first valve 38A may be returned to the opening A1 equal to or smaller than the first opening before the end of the exhaust stroke of the first cycle. With this control, advantages similar to those described above are achieved.

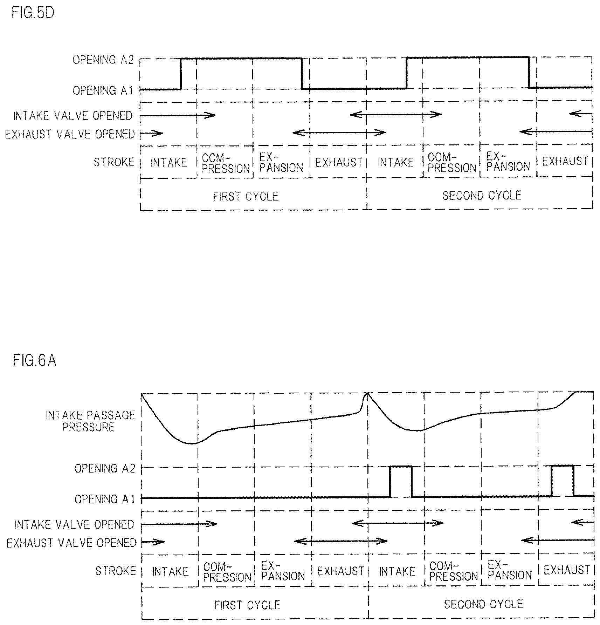

FIG. 5D is a time chart of fourth independent control.

As illustrated in FIG. 5D, the first control section 100 keeps the opening of the first valve 38A at the opening A1 in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A when the intake valve 32 is opened, and further changes the opening of the first valve 38A when the intake valve 32 is closed. Specifically, the second control section 105 changes the opening of the first valve 38A to the opening A2 in the intake stroke of the first cycle, and then returns the opening of the first valve 38A to the opening A1 in the expansion stroke of the first cycle. Thus, the amount of air sucked into the intake passage 30 can be increased, and backflow of burnt gas can be inhibited. In the second cycle, the first and second control sections 100 and 105 control the opening of the first valve 38A similarly to the first cycle, so that the amount of intake air and the amount of burnt gas can be controlled independently. As a result, an increase in the amount of intake air and enhancement of fuel ignition performance are achieved.

### Startup Control

Next, the startup control of the engine 4 will be described. The startup control is performed to start up the engine 4 successfully. During wintertime or in cold climate areas, for example, it is difficult for the engine 4 to start up. The following startup control is particularly suitable during wintertime or in cold climate areas, for example. When a fuel containing alcohol such as ethanol is used, it is more difficult for the engine 4 to start up than when gasoline is used. The following startup control is particularly suitable when an alcohol-containing fuel is used.

The startup control is performed by the ECU 90. After turning ON a main switch (not illustrated), a rider causes a kick shaft (not illustrated) to rotate or operates a self-starter switch (not illustrated), and thus a self-starter motor is rotated, which then rotates the crankshaft 23 of the engine 4 forcibly. The ECU 90 may start the startup control upon turning ON of the main switch, for example. Alternatively, the ECU 90 may start the startup control upon detection of rotation of the kick shaft, operation of the self-starter switch, rotation of the self-starter motor or rotation of the crankshaft 23.

The startup control can be performed by using the first valve 38A and/or the second valve 38B. Hereinafter, the startup control performed by using the first valve 38A will be described. Each opening in FIGS. 6A to 6D, which will be described below, refers to the opening of the first valve 38A.

FIG. 6A is a time chart of first startup control.

As illustrated in FIG. 6A, the first control section 100 keeps the opening of the first valve 38A at the opening A1 from the intake stroke of the first cycle to the exhaust stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, in the second cycle, the second control section 105 changes the opening of the first valve 38A when the intake valve 32 is opened. Specifically, the second control section 105 changes the opening of the first valve 38A to the opening A2 in the intake stroke of the second cycle, keeps the opening of the first valve 38A at the opening A2 in the intake stroke, and then returns the opening of the first valve 38A to the opening A1 in the intake stroke. Hence, the amount of air sucked into the intake passage 30 can be increased.

Then, in the second cycle, the second control section 105 further changes the opening of the first valve 38A when the intake valve 32 is closed. Specifically, the second control section 105 changes the opening of the first valve 38A to the opening A2 in the exhaust stroke of the second cycle, keeps the opening of the first valve 38A at the opening A2 in the exhaust stroke, and then returns the opening of the first valve 38A to the opening A1 in the exhaust stroke. Hence, the amount of air sucked into the intake passage 30 is increased, thus increasing the intake pipe pressure and inhibiting burnt gas from flowing backward to the inside of the intake passage 30. As a result, fuel ignition is facilitated in the third cycle subsequent to the second cycle.

Note that in the first startup control, the opening of the first valve 38A may be changed to the second opening A2 in any one of the compression, expansion and exhaust strokes of the second cycle, and the opening of the first valve 38A may be returned to the opening A1 equal to or smaller than the first opening before the end of the exhaust stroke of the second cycle. With this control, advantages similar to those described above are achieved.

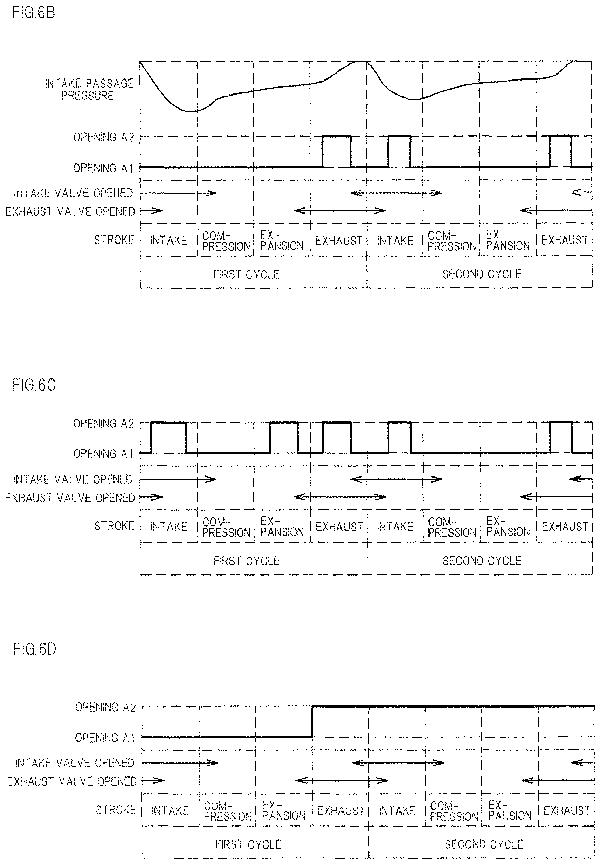

FIG. 6B is a time chart of second startup control.

As illustrated in FIG. 6B, the first control section 100 keeps the opening of the first valve 38A at the opening A1 from the intake stroke of the first cycle to the expansion stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, in the first cycle, the second control section 105 changes the opening of the first valve 38A when the intake valve 32 is closed. Specifically, the second control section 105 changes the opening of the first valve 38A to the opening A2 in the exhaust stroke of the first cycle, keeps the opening of the first valve 38A at the opening A2 in the exhaust stroke, and then returns the opening of the first valve 38A to the opening A1 in the exhaust stroke. Hence, the amount of air sucked into the intake passage 30 is increased, thus increasing the intake pipe pressure and inhibiting burnt gas from flowing backward to the inside of the intake passage 30. As a result, fuel ignition is facilitated in the second cycle. Note that control performed in the second cycle of the second startup control is similar to the control performed in the second cycle of the first startup control described above, and therefore, advantages similar to those described above are achieved.

FIG. 6C is a time chart of third startup control.

As illustrated in FIG. 6C, the first control section 100 keeps the opening of the first valve 38A at the opening A1 at least in a portion of the intake stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

The second control section 105 changes the opening of the first valve 38A to the opening A2 in each of the intake, expansion and exhaust strokes of the first cycle, and then returns the opening of the first valve 38A to the opening A1. Thus, the amount of intake air and the amount of burnt gas can be controlled independently. Note that control performed in the second cycle of the third startup control is similar to the control performed in the second cycle of the first startup control described above, and therefore, advantages similar to those described above are achieved.

FIG. 6D is a time chart of fourth startup control.

As illustrated in FIG. 6D, the first control section 100 keeps the opening of the first valve 38A at the opening A1 from the intake stroke of the first cycle to the expansion stroke of the first cycle. Thus, the intake pipe pressure is kept low in the intake stroke of the first cycle. Therefore, vaporization of the fuel in the intake passage 30 is promoted and the fuel is increased in concentration, thus facilitating fuel ignition in the first cycle.

Then, the second control section 105 changes the opening of the first valve 38A to the opening A2 and keeps the opening of the first valve 38A at the opening A2 in the exhaust stroke of the first stroke. Hence, in the intake stroke of the second cycle, backflow of burnt gas is prevented and the amount of intake air is increased, thus enabling a smooth transition to an idling state.

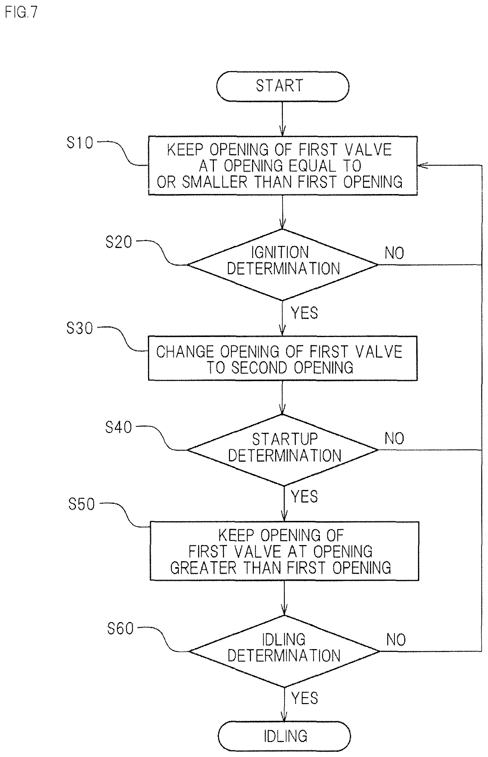

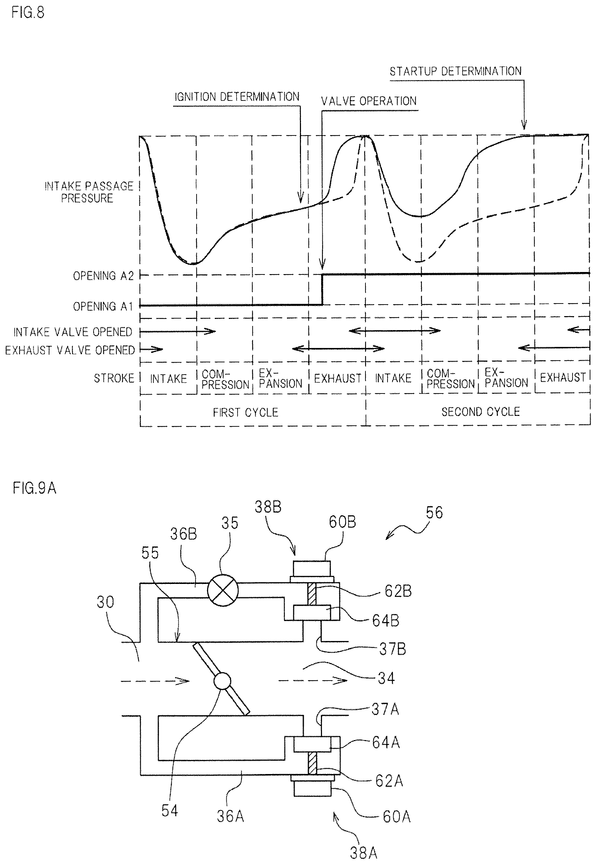

The above-described startup control is performed irrespective of the state of the engine 4. Alternatively, the state of the engine 4 may be determined, and the opening(s) of the first valve 38A and/or the second valve 38B may be controlled on the basis of the determination result. Next, startup control including determining whether or not the state of the engine 4 is a given state will be described. The following description is directed to the startup control performed by using the first valve 38A. FIG. 7 is a flow chart of the startup control. FIG. 8 is a time chart of the startup control including determination steps. In FIG. 8, the intake pipe pressure indicated by the solid line is obtained when the opening of the first valve 38A is controlled, and the intake pipe pressure indicated by the dotted line is obtained when the opening of the first valve 38A is not controlled.

First, in Step S10, the first control section 100 keeps the opening of the first valve 38A at the opening A1 at least in a portion of the intake stroke of the first cycle. As illustrated in FIG. 8, in this example, the first control section 100 keeps the opening of the first valve 38A at the opening A1 in the whole intake stroke of the first cycle. In this step, the first control section 100 supplies a driving signal to the solenoid 60A to move the valve body 64A attached to the tip of the shaft 62A, so that the first bypass passage 36A is closed. Upon execution of this step, the intake pipe pressure of a downstream region of the intake passage 30 is kept low. Therefore, vaporization of the fuel in the intake passage 30 is promoted and the fuel is increased in concentration, thus facilitating fuel ignition in the first cycle. Hereinafter, the state where the opening of the first valve 38A is kept at the opening A1 refers to the closed state in which the first bypass passage 36A is closed.

Upon execution of Step S10, the control procedure then proceeds to Step S20 in which whether or not the fuel is ignited is determined (fuel ignition determination). In this step, the ignition detection section 110 determines whether or not the fuel is ignited on the basis of the rotational speed of the engine 4 detected by the rotational speed sensor 70 in the expansion stroke of the first cycle. For example, when the rotational speed is equal to or higher than a given rotational speed, the ignition detection section 110 determines that the fuel is ignited. Alternatively, for example, when the amount of increase in the rotational speed per unit time is equal to or higher than a given value, the ignition detection section 110 determines that the fuel is ignited. Upon determination by the ignition detection section 110 that the fuel is not ignited, the control procedure returns to Step S10 in which the opening of the first valve 38A is kept at the opening A1.

Conversely, upon determination by the ignition detection section 110 that the fuel is ignited, the control procedure then proceeds to Step S30 in which the second control section 105 changes the opening of the first valve 38A to the opening A2 before the end of the intake stroke of the second cycle. As illustrated in FIG. 8, in this example, the second control section 105 changes the opening of the first valve 38A to the opening A2 in the exhaust stroke of the first cycle. In this step, the second control section 105 supplies a driving signal to the solenoid 60A to move the valve body 64A, so that the first bypass passage 36A is opened. Then, the second control section 105 keeps the opening of the first valve 38A at an opening greater than the first opening (i.e., at the second opening A2 in this example) as necessary. Upon execution of this step, the amount of air sucked to the downstream region of the intake passage 30 is increased and the intake pipe pressure thereof is increased, thus making it possible to inhibit backflow of burnt gas. Therefore, fuel ignition is facilitated in the second cycle. In other words, "misfiring" is unlikely to occur in the second cycle. Hereinafter, the state where the opening of the first valve 38A is kept at the opening A2 refers to the open state in which the first bypass passage 36A is opened.

Upon execution of Step S30, the control procedure then proceeds to Step S40 in which whether or not the engine 4 is started up is determined (startup determination). In this step, the state detection section 115 detects the state of the engine 4 on the basis of the rotational speed of the engine 4 detected by the rotational speed sensor 70 in the expansion stroke of the second cycle. The determination section 120 determines whether or not the engine 4 is started up on the basis of the state of the engine 4 detected by the state detection section 115. For example, when the state of the engine 4 in which the rotational speed thereof is equal to or higher than a given value is detected by the state detection section 115, the determination section 120 determines that the engine 4 is started up. Upon determination by the determination section 120 that the engine 4 is not started up because the rotational speed of the engine 4 is lower than the given value, the control procedure returns to Step S10 in which the third control section 125 keeps the opening of the first valve 38A at the opening A1.

Conversely, upon determination by the determination section 120 that the engine 4 is started up because the rotational speed of the engine 4 is equal to or higher than the given value, the control procedure then proceeds to Step S50 in which the third control section 125 keeps the opening of the first valve 38A at an opening greater than the first opening. As illustrated in FIG. 8, in this example, the third control section 125 keeps the opening of the first valve 38A at the opening A2. In this step, the third control section 125 supplies a driving signal to the solenoid 60A to move the valve body 64A so that the first bypass passage 36A is opened, and maintains the open state of the first bypass passage 36A. Upon execution of this step, the amount of air sucked to the downstream region of the intake passage 30 is increased, thus enabling a smooth transition to the idling state.

Upon execution of Step S50, the control procedure then proceeds to Step S60 in which whether or not the engine 4 is idling is determined (idling determination). In this step, the state detection section 115 detects the state of the engine 4 on the basis of the rotational speed of the engine 4 detected by the rotational speed sensor 70 in the expansion stroke of the cycle subsequent to the second cycle. The determination section 120 determines whether or not the engine 4 is idling on the basis of the state of the engine 4 detected by the state detection section 115. For example, when the state of the engine 4 in which the rotational speed thereof is equal to or higher than the given value is detected by the state detection section 115, the determination section 120 determines that the engine 4 is idling. Upon determination by the determination section 120 that the engine 4 is not idling because the rotational speed of the engine 4 is lower than the given value, the control procedure returns to Step S10 in which the third control section 125 keeps the opening of the first valve 38A at the opening A1.

Conversely, upon determination by the determination section 120 that the engine 4 is idling because the rotational speed of the engine 4 is equal to or higher than the given value, the third control section 125 keeps the opening of the first valve 38A at the opening greater than the first opening to maintain the idling state of the engine 4.

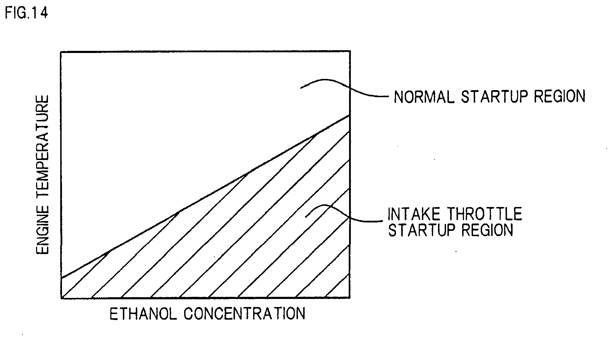

Whether or not the amount of intake air flowing through the intake passage 30 should be controlled with the use of the valve device 56 having the above-described structure may be decided on the basis of the temperature of the engine 4 and ethanol concentration. FIG. 14 is a graph illustrating a relationship between the engine temperature and ethanol concentration. In FIG. 14, an intake throttle startup region represents a region where the amount of intake air flowing through the intake passage 30 is controlled with the use of the valve device 56, while a normal startup region represents a region where the amount of intake air flowing through the intake passage 30 is not controlled with the use of the valve device 56.

Note that even when a value indicating the relationship between the engine temperature and ethanol concentration is in the intake throttle startup region, the ECU 90 suspends the control of the amount of intake air flowing through the intake passage 30, if the throttle position sensor 76 has detected that the throttle valve 54 is opened or the pressure sensor 74 has detected that the intake pipe pressure in the intake passage 30 is not lower than a given pressure. When the control is suspended, the rider (user) is preferably notified of the suspension. Notification of the suspension can be provided to the rider visually through an indicator panel (not illustrated), for example.

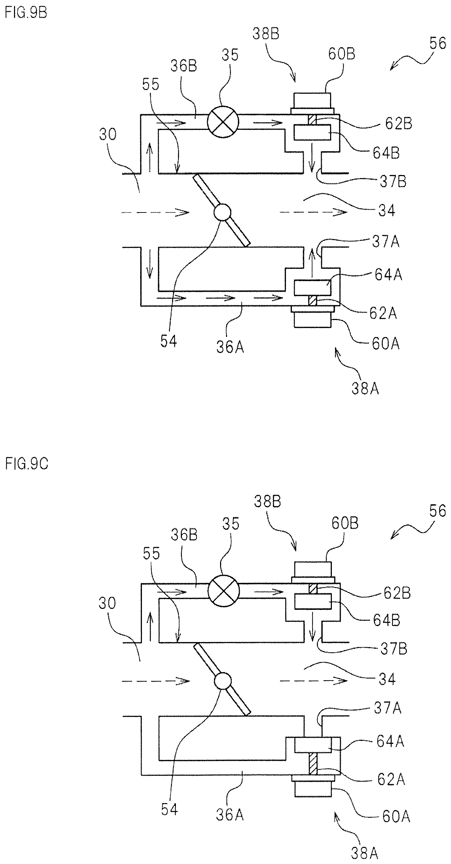

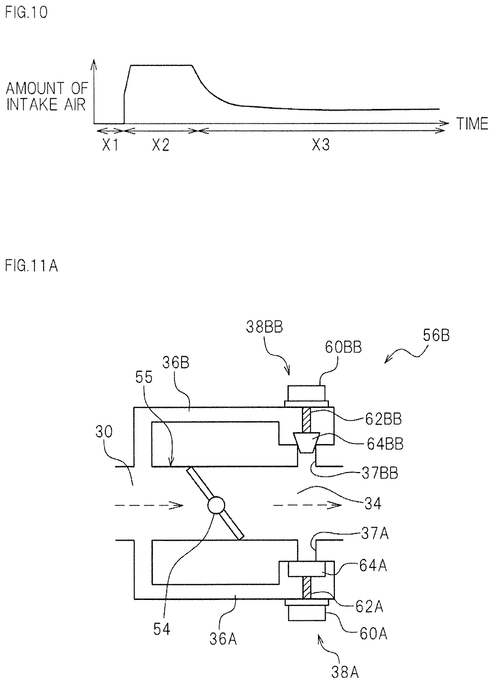

Next, functions of the valve device 56 will be described with reference to FIGS. 9A to 9C and FIG. 10. FIG. 9A is a schematic diagram illustrating a state of the valve device 56 before startup of the engine 4. FIG. 9B is a schematic diagram illustrating a state of the valve device 56 during cold idling. FIG. 9C is a schematic diagram illustrating a state of the valve device 56 during warm idling. And FIG. 10 is a graph illustrating time-varying changes in the amount of intake air before and after engine startup.

As illustrated in FIG. 9A, the first and second bypass passages 36A and 36B are both closed by the valve device 56 before startup of the engine 4 (during cranking). Specifically, no power is supplied to the solenoid 60A while power is supplied to the solenoid 60B, and therefore, the first and second valves 38A and 38B are both closed. In this case, the first passage port 37A of the first bypass passage 36A is closed by the valve body 64A, and the second passage port 37B of the second bypass passage 36B is closed by the valve body 64B. Hence, as illustrated in FIG. 10, the amount of intake air can be reduced during a period X1 before startup of the engine 4. Note that even when the first and second passage ports 37A and 37B are closed, a slight amount of air is allowed to flow through the main passage 34. As a result, a slight amount of intake air can be ensured in the intake passage 30 as a whole.

As illustrated in FIG. 9B, the first and second bypass passages 36A and 36B are both opened by the valve device 56 when the engine 4 is idling and the temperature thereof is lower than the given temperature (i.e., during cold idling). Specifically, upon determination by the determination section 120 that the engine 4 is idling and when the temperature of the engine 4 detected by the temperature sensor 72 is lower than the given temperature, power is supplied to the solenoid 60A while no power is supplied to the solenoid 60B. Thus, the first and second valves 38A and 38B are both opened. In this case, the valve bodies 64A and 64B each move in the direction away from the main passage 34, so that the first and second bypass passages 36A and 36B are opened. Hence, as illustrated in FIG. 10, the amount of intake air can be increased during a period X2 corresponding to cold idling of the engine 4.

As illustrated in FIG. 9C, the first bypass passage 36A is closed and the second bypass passage 36B is opened by the valve device 56 when the engine 4 is idling and the temperature thereof is equal to or higher than the given temperature (i.e., during warm idling). Specifically, upon determination by the determination section 120 that the engine 4 is idling and when the temperature of the engine 4 detected by the temperature sensor 72 is equal to or higher than the given temperature, no power is supplied to the solenoid 60B. Thus, the second valve 38B is opened. In this case, the valve body 64B moves in the direction away from the main passage 34, so that the second bypass passage 36B is opened. Since no power is supplied to the solenoid 60A, the first valve 38A is closed. In this case, the first passage port 37A of the first bypass passage 36A is closed by the valve body 64A. Hence, as illustrated in FIG. 10, the amount of intake air can be kept at an intermediate level during a period X3 corresponding to warm idling of the engine 4. Note that the "amount of intake air at an intermediate level" refers to the amount of intake air per unit time which is larger than the amount of intake air per unit time before startup of the engine 4 but smaller than the amount of intake air per unit time during cold idling.

Note that before startup of the engine 4 (i.e., during cranking), the first passage port 37A of the first bypass passage 36A and/or the second passage port 37B of the second bypass passage 36B may be opened intermittently so as to allow a very small amount of air to flow through the first bypass passage 36A and/or the second bypass passage 36B. However, the amount of air flowing through the first bypass passage 36A and/or the second bypass passage 36B in that case is smaller than the amount of air flowing therethrough during warm idling. The first passage port 37A and/or the second passage port 37B may be opened intermittently by appropriately adjusting a duty ratio described later.

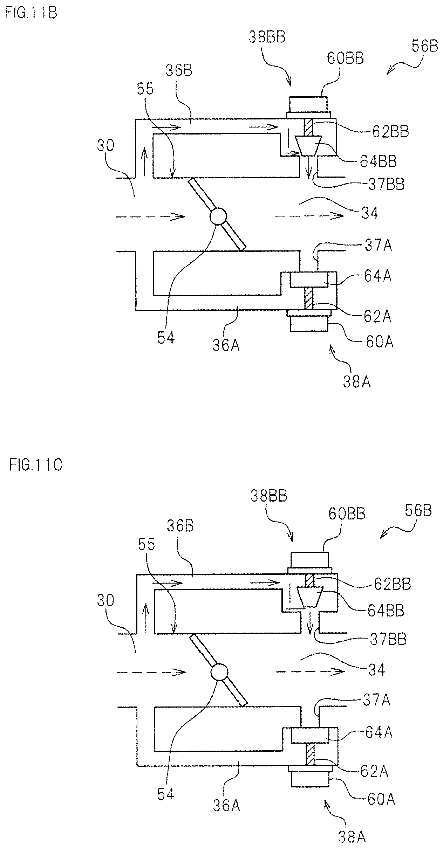

Although the first and second valves 38A and 38B of the valve device 56 each include a solenoid valve, one of the first and second valves 38A and 38B may alternatively be a valve including a stepping motor. FIGS. 11A to 11C illustrate a valve device 56B. As illustrated in FIGS. 11A to 11C, a second valve 38BB of the valve device 56B preferably includes a valve that includes: a stepping motor 60BB; a shaft 62BB driven by the stepping motor 60BB so as to be moved in a vertical direction in FIGS. 11A to 11C; and a valve body 64BB attached to a tip of the shaft 62BB. Upon vertical movement of the shaft 62BB by the stepping motor 60BB, the valve body 64BB attached to the tip of the shaft 62BB also moves in the vertical direction. Thus, the valve body 64BB opens or closes a second passage port 37BB of the second bypass passage 36B, and the flow passage cross-sectional area of the second bypass passage 36B is changed in accordance with the vertical position of the valve body 64BB. As a result, the amount of air flowing through the second bypass passage 36B is adjusted. Since the position of the valve body 64BB is adjustable, the amount of air flowing through the second bypass passage 36B can be freely adjusted. Note that FIG. 11A illustrates the valve device 56B in which the valve body 64BB is fully closed, FIG. 11B illustrates the valve device 56B in which the valve body 64BB is opened half way, and FIG. 11C illustrates the valve device 56B in which the valve body 64BB is fully opened.

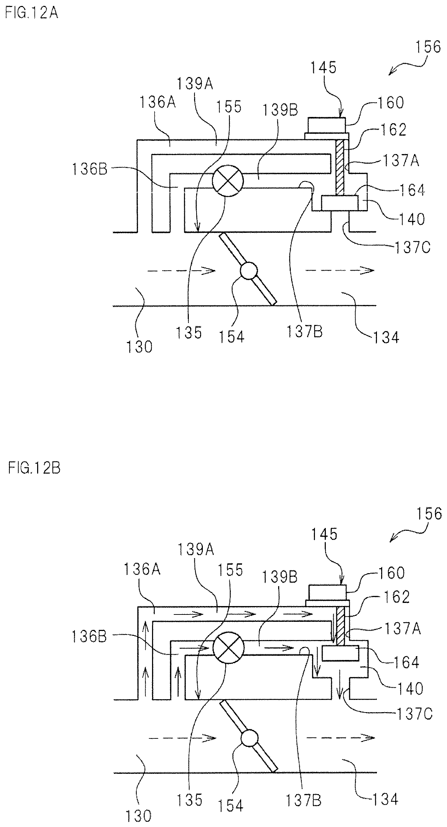

In the intake passage 30 of the engine 4 described above, the first and second bypass passages 36A and 36B are mutually independent bypass passages. Hereinafter, a structure of an intake passage according to a preferred variation (first variation) of the present teaching will be described with reference to FIGS. 12A to 12C.

As illustrated in FIG. 12A, an intake passage 130 according to the first variation preferably includes: a main passage 134 in which a throttle valve 154 serving as a main valve is contained; a first bypass passage 136A through which regions of the main passage 134 located upstream and downstream of the throttle valve 154 are communicated with each other; and a second bypass passage 136B through which the regions of the main passage 134 located upstream and downstream of the throttle valve 154 are communicated with each other. In downstream regions of the first and second bypass passages 136A and 136B, a portion of the first bypass passage 136A and a portion of the second bypass passage 136B constitute a common passage 140 and are thus integral with each other. Although not illustrated in FIG. 12A, the throttle valve 154 is provided with the throttle position sensor 76 (see FIG. 2) that detects an opening of the throttle valve 154. The intake passage 130 preferably further includes a valve device 156 capable of opening and closing the first and second bypass passages 136A and 136B. Note that in this preferred variation, the first and second bypass passages 136A and 136B and a throttle body 155 that constitutes the main passage 134 are separate components. Alternatively, the throttle body 155 may be integral with one or both of the first and second bypass passages 136A and 136B.

The first bypass passage 136A preferably includes a first independent passage 139A continuous with the common passage 140. A first passage port 137A is provided between the first independent passage 139A and the common passage 140. The second bypass passage 136B preferably includes: a second independent passage 139B continuous with the common passage 140; and a flow restrictor 135. A second passage port 137B is provided between the second independent passage 139B and the common passage 140. A third passage port 137C is provided between the common passage 140 and the main passage 134. Note that the flow restrictor 135 does not necessarily have to be provided in the second independent passage 139B, but may alternatively be provided in the first independent passage 139A or both of the first and second independent passages 139A and 139B.

The valve device 156 preferably includes a common valve 145 capable of opening and closing the first passage port 137A and the third passage port 137C. The amount of air flowing through the first and second bypass passages 136A and 136B can be controlled by adjusting an opening of the common valve 145 to change the flow passage cross-sectional area. The common valve 145 preferably includes a solenoid valve that includes: a solenoid 160; a shaft 162 driven by the solenoid 160 so as to be moved in a vertical direction in FIGS. 12A to 12C; and a valve body 164 attached to a tip of the shaft 162.

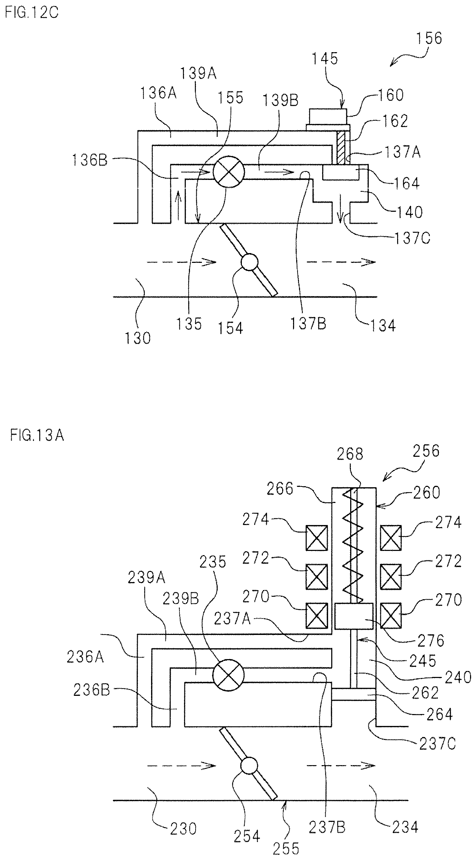

In the common valve 145, the direction of movement of the shaft 162 changes in response to whether or not power is supplied to the solenoid 160. Upon movement of the shaft 162 in a direction away from the main passage 134 (i.e., an upward direction in FIGS. 12A to 12C), the valve body 164 also moves in the same direction to close the first passage port 137A and open the third passage port 137C (see FIG. 12C). Conversely, upon movement of the shaft 162 in a direction toward the main passage 134 (i.e., a downward direction in FIGS. 12A to 12C) by the solenoid 160, the valve body 164 also moves in the same direction to close the third passage port 137C (see FIG. 12A). In the common valve 145, a ratio (i.e., a duty ratio) between a time period during which the first passage port 137A is closed and a time period during which the third passage port 137C is closed is appropriately adjusted, thus making it possible to intermittently open the first and second bypass passages 136A and 136B and to freely adjust the amount of air flowing from the third passage port 137C to the main passage 134 (see FIG. 12B).

Note that in this preferred variation, the third passage port 137C is closed when no power is supplied to the solenoid 160. Alternatively, the third passage port 137C may be closed when power is supplied to the solenoid 160. The common passage 140 and the common valve 145 may alternatively be provided in upstream regions of the first and second bypass passages 136A and 136B. Flow rates of air flowing through the first and second independent passages 139A and 139B per unit time are not limited to any particular flow rates. However, when the flow rates are different from each other, the amount of air flowing through the intake passage 130 can be extensively adjusted.

Next, functions of the valve device 156 according to this preferred variation will be described with reference to FIG. 10 and FIGS. 12A to 12C. FIG. 12A is a schematic diagram illustrating a state of the valve device 156 before startup of the engine 4. FIG. 12B is a schematic diagram illustrating a state of the valve device 156 during cold idling. And FIG. 12C is a schematic diagram illustrating a state of the valve device 156 during warm idling.

As illustrated in FIG. 12A, the third passage port 137C is closed by the valve device 156 before startup of the engine 4 (during cranking). Specifically, no power is supplied to the solenoid 160, and therefore, the common valve 145 is closed. In this case, the third passage port 137C is closed by the valve body 164, so that no air flows to the main passage 134 via the first and second bypass passages 136A and 136B. Hence, as illustrated in FIG. 10, the amount of intake air is kept low during the period X1 before startup of the engine 4.

As illustrated in FIG. 12B, the first passage port 137A and the third passage port 137C are each opened and closed repeatedly by the valve device 156 when the engine 4 is idling and the temperature thereof is lower than the given temperature (i.e., during cold idling). Specifically, upon determination by the determination section 120 that the engine 4 is idling and when the temperature of the engine 4 detected by the temperature sensor 72 is lower than the given temperature, power is supplied to the solenoid 160 so that a preset duty ratio is obtained. Thus, the common valve 145 is opened and closed repeatedly. In this case, movement of the valve body 164 in the direction away from the main passage 134 and movement of the valve body 164 in the direction toward the main passage 134 are repeated in an alternating manner, so that closing of the first passage port 137A and closing of the third passage port 137C are repeated in an alternating manner. Hence, as illustrated in FIG. 10, the amount of intake air can be increased during the period X2 corresponding to cold idling of the engine 4 because air can flow to the main passage 134 via the first and second bypass passages 136A and 136B.

As illustrated in FIG. 12C, the first passage port 137A is closed and the second and third passage ports 137B and 137C are opened by the valve device 156 when the engine 4 is idling and the temperature thereof is equal to or higher than the given temperature (i.e., during warm idling). Specifically, upon determination by the determination section 120 that the engine 4 is idling and when the temperature of the engine 4 detected by the temperature sensor 72 is equal to or higher than the given temperature, power is supplied to the solenoid 160. Thus, the valve body 164 moves in the direction away from the main passage 134 to open the second and third passage ports 137B and 137C and close the first passage port 137A. Hence, as illustrated in FIG. 10, the amount of intake air can be kept at an intermediate level during the period X3 corresponding to warm idling of the engine 4 because air can flow to the main passage 134 via the second bypass passage 136B.

Next, a structure of an intake passage according to another preferred variation (second variation) of the present teaching will be described with reference to FIGS. 13A to 13C.

As illustrated in FIG. 13A, an intake passage 230 according to the second variation preferably includes: a main passage 234 in which a throttle valve 254 is contained; a first bypass passage 236A through which regions of the main passage 234 located upstream and downstream of the throttle valve 254 are communicated with each other; and a second bypass passage 236B through which the regions of the main passage 234 located upstream and downstream of the throttle valve 254 are communicated with each other. In downstream regions of the first and second bypass passages 236A and 236B, a portion of the first bypass passage 236A and a portion of the second bypass passage 236B constitute a common passage 240 and are thus integral with each other. Note that in this preferred variation, the first and second bypass passages 236A and 236B and a throttle body 255 that constitutes the main passage 234 are separate components. Alternatively, the throttle body 255 may be integral with one or both of the first and second bypass passages 236A and 236B.

The first bypass passage 236A preferably includes a first independent passage 239A continuous with the common passage 240. A first passage port 237A is provided between the first independent passage 239A and the common passage 240. The second bypass passage 236B preferably includes: a second independent passage 239B continuous with the common passage 240; and a flow restrictor 235. A second passage port 237B is provided between the second independent passage 239B and the common passage 240. The flow restrictor 235 is a valve capable of adjusting the amount of air flowing through the second independent passage 239B. A third passage port 237C is provided between the common passage 240 and the main passage 234. Note that the flow restrictor 235 does not necessarily have to be provided in the second independent passage 239B, but may alternatively be provided in the first independent passage 239A or both of the first and second independent passages 239A and 239B.

As illustrated in FIG. 13A, a valve device 256 preferably includes a common valve 245 capable of opening and closing the first, second and third passage ports 237A, 237B and 237C. The amount of air flowing through the first and second bypass passages 236A and 236B can be controlled by adjusting an opening of the common valve 245. The common valve 245 preferably includes a solenoid valve operable in multiple steps. The solenoid valve preferably includes: a solenoid 260 operable in multiple steps (e.g., three steps in this variation); a shaft 262 driven by the solenoid 260 so as to be moved in a vertical direction in FIGS. 13A to 13C; and a valve body 264 attached to a tip of the shaft 262. The valve body 264 is provided so as to be slidable along an inner peripheral surface of the common passage 240 by the solenoid 260.

The solenoid 260 preferably includes a containing portion 266, a spring portion 268, a core 276, a first magnet coil 270, a second magnet coil 272, and a third magnet coil 274. One end of the core 276 is connected to the spring portion 268, and the other end of the core 276 is connected to the shaft 262.

The containing portion 266 is connected to one end of the common passage 240. The first, second and third magnet coils 270, 272 and 274 are each provided outward of the containing portion 266.

In the valve device 256, the first magnet coil 270, the second magnet coil 272 and/or the third magnet coil 274 is/are selectively energized by the ECU 90 (see FIG. 2), thus generating an electromagnetic force. As a result, the core 276 moves within the containing portion 266.

As illustrated in FIG. 13A, the third passage port 237C is closed by the common valve 245 of the valve device 256 before startup of the engine 4 (during cranking). Specifically, inside the containing portion 266, the core 276 moves to a position inwardly of the first magnet coil 270, and thus the valve body 264 closes the third passage port 237C. In this case, no air flows to the main passage 234 via the first and second bypass passages 236A and 236B. Hence, as illustrated in FIG. 10, the amount of intake air is kept low during the period X1 before startup of the engine 4. Note that the third passage port 237C may be opened intermittently before startup of the engine 4. For example, air may be allowed to flow to the main passage 234 via the first bypass passage 236A and/or the second bypass passage 236B by moving the core 276.

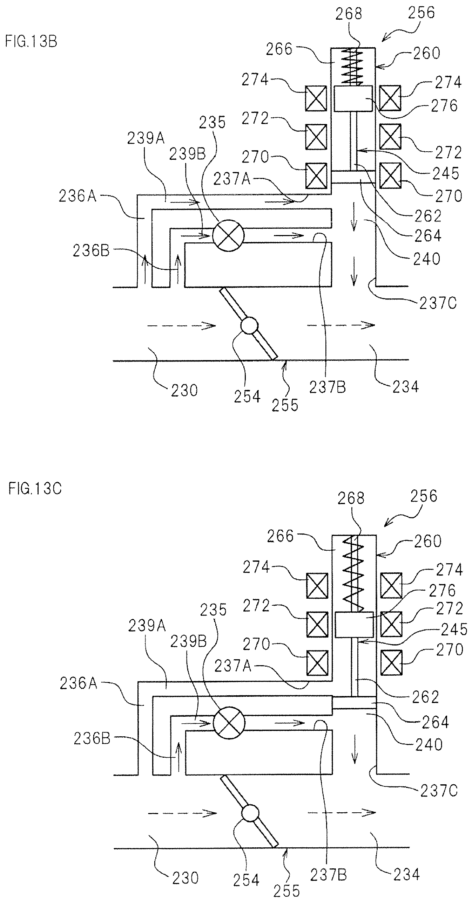

As illustrated in FIG. 13B, the first, second and third passage ports 237A, 237B and 237C are opened by the common valve 245 of the valve device 256 during cold idling. Specifically, inside the containing portion 266, the core 276 moves to a position inward of the third magnet coil 274, and thus the valve body 264 opens the first, second and third passage ports 237A, 237B and 237C. In this case, air flows to the main passage 234 via the first and second bypass passages 236A and 236B. Hence, as illustrated in FIG. 10, the amount of intake air can be increased during the period X2 corresponding to cold idling of the engine 4.

As illustrated in FIG. 13C, the first passage port 237A is closed and the second and third passage ports 237B and 237C are opened by the common valve 245 of the valve device 256 during warm idling. Specifically, inside the containing portion 266, the core 276 moves to a position inward of the second magnet coil 272, and thus the valve body 264 closes the first passage port 237A but opens the second and third passage ports 237B and 237C. In this case, air flows to the main passage 234 via the second bypass passage 236B. Hence, as illustrated in FIG. 10, the amount of intake air can be kept at an intermediate level during the period X3 corresponding to warm idling of the engine 4.

### Effects

As described above, the engine 4 installed on the motorcycle 1 includes the second bypass passage 36B in addition to the main passage 34 and the first bypass passage 36A, and also includes the valve device 56 capable of opening and closing the first and second bypass passages 36A and 36B. The first and second bypass passages 36A and 36B are closed or at least intermittently opened before startup of the engine 4, so that the amount of intake air is minimized. Each of the first and second bypass passages 36A and 36B is at least intermittently opened during cold idling in which the engine 4 is idling and the temperature thereof is lower than the given temperature, so that the amount of intake air is maximized. One of the first and second bypass passages 36A and 36B is opened and the other one of the first and second bypass passages 36A and 36B is closed during warm idling in which the engine 4 is idling and the temperature thereof is equal to or higher than the given temperature, so that the amount of intake air is kept at an intermediate level without performing "duty control". As a result, the service life of the valve device 56 is further extended, and abnormal noise is prevented during warm idling of the engine 4.

Further, the first and second bypass passages 36A and 36B are mutually independent bypass passages. Thus, each of the first and second bypass passages 36A and 36B is opened and closed independently, which makes it possible to easily adjust the amount of intake air.

Further, the valve device 56 includes the first valve 38A provided in the first bypass passage 36A, and the second valve 38B provided in the second bypass passage 36B. Both of the first and second valves 38A and 38B are closed or at least intermittently opened before startup of the engine 4. Both of the first and second valves 38A and 38B are opened during cold idling. One of the first and second valves 38A and 38B is closed and the other one of the first and second valves 38A and 38B is opened during warm idling. Thus, the amount of intake air can be suitably adjusted before startup of the engine 4, during cold idling and during warm idling without performing duty control.

Further, each of the first and second valves 38A and 38B includes a solenoid valve. A solenoid valve is operable at high speed and is relatively inexpensive. Accordingly, the openings of the first and second valves 38A and 38B can be quickly changed by using solenoid valves as the first and second valves 38A and 38B.

Further, one of the first and second valves 38A and 38B includes a solenoid valve, and the other one of the first and second valves 38A and 38B includes a valve that includes a stepping motor. Thus, for example, the flow passage cross-sectional area of the second bypass passage 36B in which the second valve 38B including the stepping motor 60BB is disposed can be freely changed, and therefore, the amount of intake air flowing therethrough can be freely adjusted.

According to the present preferred embodiment, a portion of the first bypass passage 136A and a portion of the second bypass passage 136B are integral with each other. Thus, the first and second bypass passages 136A and 136B are partially integral with each other so as to constitute the common passage 140, which facilitates control of opening and closing of the first and second bypass passages 136A and 136B.

According to the present preferred embodiment, a portion of the first bypass passage 136A and a portion of the second bypass passage 136B constitute the common passage 140. The first bypass passage 136A includes the first independent passage 139A continuous with the common passage 140. The second bypass passage 136B includes the second independent passage 139B continuous with the common passage 140. The first passage port 137A is provided between the common passage 140 and the first independent passage 139A. The second passage port 137B is provided between the common passage 140 and the second independent passage 139B. The third passage port 137C is provided between the common passage 140 and the main passage 134. The valve device 156 includes the common valve 145 capable of opening and closing the first passage port 137A and the third passage port 137C. The third passage port 137C is closed or at least intermittently opened by the common valve 145 before startup of the engine 4. Each of the first passage port 137A and the third passage port 137C is opened and closed repeatedly by the common valve 145 during cold idling. The first passage port 137A is closed and the third passage port 137C is opened by the common valve 145 during warm idling. Since the first and second bypass passages 136A and 136B can be opened and closed by the single common valve 145 in this manner, cost reduction is achieved and the control is facilitated.

According to the present preferred embodiment, a portion of the first bypass passage 236A and a portion of the second bypass passage 236B constitute the common passage 240. The first bypass passage 236A includes the first independent passage 239A continuous with the common passage 240. The second bypass passage 236B includes the second independent passage 239B continuous with the common passage 240. The first passage port 237A is provided between the common passage 240 and the first independent passage 239A. The second passage port 237B is provided between the common passage 240 and the second independent passage 239B. The third passage port 237C is provided between the common passage 240 and the main passage 234. The valve device 256 includes the common valve 245 capable of opening and closing the first passage port 237A and the third passage port 237C. The third passage port 237C is closed or at least intermittently opened by the common valve 245 before startup of the engine 4. The first, second and third passage ports 237A, 237B and 237C are opened by the common valve 245 during cold idling. The first passage port 237A is closed and the third passage port 237C is opened by the common valve 245 during warm idling. Since the first and second bypass passages 236A and 236B can be opened and closed by the single common valve 245 in this manner, cost reduction is achieved and the control is facilitated.

According to the present preferred embodiment, the common valve 145 includes a solenoid valve. A solenoid valve is operable at high speed and is relatively inexpensive. Accordingly, the opening of the common valve 145 can be quickly changed with the use of a solenoid valve as the common valve 145.

According to the present preferred embodiment, the common valve 245 includes a solenoid valve operable in multiple steps. Thus, the amount of intake air can be easily adjusted with the use of a solenoid valve operable in multiple steps.

The amount of air flowing through the first bypass passage 36A and the amount of air flowing through the second bypass passage 36B are different from each other. Thus, the amount of intake air during warm idling can be set to a desired amount.

One of the first and second bypass passages 36A and 36B, which is opened during warm idling, is provided with the flow restrictor 35 capable of adjusting the amount of air flowing through the one of the first and second bypass passages 36A and 36B. Thus, the amount of intake air during warm idling can be more minutely set.

The engine 4 includes the throttle body 55 that constitutes the main passage 34 in which the throttle valve 54 is provided. The throttle body 55 and at least one of the first and second bypass passages 36A and 36B are separate components. Thus, a conventional product can be utilized as the throttle body 55 used in the engine 4, and therefore, cost reduction can be achieved.

The used in the engine 4 contains alcohol. The alcohol-containing fuel, i.e., the fuel partially containing alcohol or the fuel containing alcohol in its entirety, has low volatility and is resistant to vaporization, and therefore, the above-described effects are more pronounced.

The engine 4 is the single-cylinder engine 4. As compared with a multi-cylinder internal combustion engine in which air is supplied to a plurality of combustion chambers from one intake passage, the single-cylinder engine 4 can control the amount of intake air with high accuracy by changing the openings of the first and second valves 38A and 38B.

Note that the engine 4 is not limited to a single-cylinder engine, but may be a multi-cylinder engine. When the engine 4 is a multi-cylinder engine, each cylinder of the multi-cylinder engine 4 may include an independent intake passage, or cylinders of the multi-cylinder engine 4 may include a common intake passage.

### REFERENCE SIGNS LIST

- 1: motorcycle (straddle-type vehicle)
- 4: engine (internal combustion engine)
- 30: intake passage
- 34: main passage
- 35: flow restrictor
- 36A: first bypass passage
- 36B: second bypass passage
- 37A: first passage port
- 37B: second passage port
- 38A: first valve
- 38B: second valve
- 54: throttle valve
- 55: throttle body
- 56: valve device
- 60A, 60B: solenoid
- 64A, 64B: valve body
- 130, 230: intake passage
- 134, 234: main passage
- 136A, 236A: first bypass passage
- 136B, 236B: second bypass passage
- 137A, 237A: first passage port
- 137B, 237B: second passage port
- 137C, 237C: third passage port
- 139A, 239A: first independent passage
- 139B, 239B: second independent passage
- 140, 240: common passage
- 145, 245: common valve
- 154, 254: throttle valve
- 156, 256: valve device
- 160, 260: solenoid
- 164, 264: valve body

## Claims

1. An internal combustion engine comprising an intake passage (130,230) through which air is introduced into a combustion chamber (25), the intake passage (130,230) comprises:
a main passage (134,234) in which a main valve (154,254) is provided; and
a first bypass passage (136A,236A) through which regions of the main passage (134,234) located upstream and downstream of the main valve (154,254) are communicated with each other,
wherein the intake passage (130,230) further comprises a second bypass passage (136B,236B) through which the regions of the main passage (134,234) located upstream and downstream of the main valve (154,254) are communicated with each other, wherein
the internal combustion engine further comprises a valve device (156,256) capable of opening and closing the first and second bypass passages (136A,236A,136B,236B), wherein
both of the first and second bypass passages (136A,236A,136B,236B) are closed or at least intermittently opened by the valve device (156,256) before startup of the internal combustion engine,
wherein each of the first and second bypass passages (136A,236A,136B,236B) is at least intermittently opened by the valve device (156,256) when the internal combustion engine is idling and a temperature of the internal combustion engine is lower than a given temperature,
wherein one of the first and second bypass passages (136A,236A,136B,236B) is closed and the other one of the first and second bypass passages (136A,236A,136B,236B) is opened by the valve device (156,256) when the internal combustion engine is idling and the temperature of the internal combustion engine is equal to or higher than the given temperature, and
wherein the order of amounts of intake air per unit time, from lowest to highest, is the amount of intake air per unit time before startup of the internal combustion engine, the amount of intake air per unit time when the internal combustion engine is idling and the temperature of the internal combustion engine is equal to or higher than the given temperature, and the amount of intake air per unit time when the internal combustion engine is idling and the temperature of the internal combustion engine is lower than the given temperature, wherein
a portion of the first bypass passage (136A,236A) and a portion of the second bypass passage (136B,236B) constitute a common passage (140,240),
wherein the first bypass passage (136A,236A) comprises a first independent passage (139A,239A) continuous with the common passage (140,240),
wherein the second bypass passage (136B,236B) comprises a second independent passage (139B,239B) continuous with the common passage (140,240),
wherein a first passage port (137A,237A) is provided between the common passage (140,240) and the first independent passage (139A,239A), a second passage port (137B,237B) is provided between the common passage (140,240) and the second independent passage (139B,239B), and a third passage port (137C,237C) is provided between the common passage (140,240) and the main passage (134,234),
wherein the valve device (156,256) comprises a common valve (145,245) capable of opening and closing the first passage port (137A,237A) and the third passage port (137C,237C),
wherein the third passage port (137C,237C) is closed or at least intermittently opened by the common valve (145,245) before startup of the internal combustion engine,
wherein each of the first passage port (137A,237A) and the third passage port (137C,237C) is opened and closed repeatedly by the common valve (145,245) when the internal combustion engine is idling and the temperature of the internal combustion engine is lower than the given temperature, and
wherein the first passage port (137A,237A) is closed and the third passage port (137C,237C) is opened by the common valve (145,245) when the internal combustion engine is idling and the temperature of the internal combustion engine is equal to or higher than the given temperature.

2. An internal combustion engine according to claim 1, wherein the common valve (145,245) comprises a solenoid valve.

3. An internal combustion engine according to claim 2, wherein the common valve (245) comprises a solenoid valve operable in multiple steps.

4. An internal combustion engine according to at least one of the claims 1 to 3, wherein the valve device (156,256) is configured to set an amount of air flowing through the first bypass passage (136A,236A) per unit time and an amount of air flowing through the second bypass passage (136B,236B) per unit time different from each other.

5. An internal combustion engine according to at least one of the claims 1 to 4, wherein one of the first and second bypass passages (136A,236A,136B,236B), which is opened when the internal combustion engine is idling and the temperature of the internal combustion engine is equal to or higher than the given temperature, is provided with a flow restrictor (135,235) capable of adjusting an amount of air flowing through the one of the first and second bypass passages (136A,236A,136B,236B).

6. An internal combustion engine according to at least one of the claims 1 to 5, wherein the internal combustion engine further comprises a throttle body (155,255) that constitutes the main passage (134,234) in which the main valve (154,254) is provided, and wherein the throttle body (155,255) and at least one of the first and second bypass passages (136A,236A,136B,236B) are separate components.

7. An internal combustion engine according to at least one of the claims 1 to 6, wherein the engine is adapted to use fuel that contains alcohol.

8. An internal combustion engine according to at least one of the claims 1 to 7, wherein the internal combustion engine is a single-cylinder internal combustion engine.

9. A straddle-type vehicle comprising the internal combustion engine according to at least one of the claims 1 to 8.

## Patentansprüche

1. Eine Brennkraftmaschine mit innerer Verbrennung die einen Einlass-Durchgang (130, 230) umfasst, durch welchen Luft in eine Verbrennungskammer (25) eingeführt wird, der Einlass-Durchgang (130, 230) umfasst:
einen Haupt-Durchgang (134, 234), indem ein Haupt-Ventil (154, 254) vorgesehen ist; und
einen ersten Umgehungs-Durchgang (136A, 236A) durch welchen Bereiche von dem Haupt-Durchgang (134, 234), die stromauf und stromab von dem Haupt-Ventil (154, 254) angeordnet sind, in Kommunikation miteinander sind,
wobei der Einlass-Durchgang (130, 230) weiterhin einen zweiten Umgehungs-Durchgang (136B, 236B) umfasst, durch welchen die Bereiche von dem Haupt-Durchgang (134, 234), die stromauf und stromab von dem Haupt-Ventil (154, 254) angeordnet sind, in Kommunikation miteinander sind, wobei
die Brennkraftmaschine mit innerer Verbrennung weiterhin umfasst, eine Ventilvorrichtung (156, 256), die in der Lage ist, die ersten und zweiten Umgehungs-Durchgänge (136A, 236A, 136B, 236B) zu öffnen und zu schließen, wobei beide von den ersten und zweiten Umgehungs-Durchgängen (136A, 236A, 136B, 236B) geschlossen oder zumindest intermittierend durch die Ventilvorrichtung vor dem Starten der Brennkraftmaschine mit innerer Verbrennung geöffnet sind,
wobei jeder von den ersten und zweiten Umgehungs-Durchgängen (136A, 236B, 136B, 236B) durch die Ventilvorrichtung (156, 256) zumindest intermittierend geöffnet ist, wenn die Brennkraftmaschine mit innerer Verbrennung im Leerlauf ist und eine Temperatur der Brennkraftmaschine mit innerer Verbrennung niedriger als eine gegebene Temperatur ist,
wobei einer von den ersten und zweiten Umgehungs-Durchgängen (136A, 236A, 136B, 236B) geschlossen ist und der andere von den ersten und zweiten Umgehungs-Durchgängen (136A, 236A, 136B, 236B) geöffnet ist durch die Ventilvorrichtung (156, 256), wenn die Brennkraftmaschine mit innerer Verbrennung im Leerlauf ist und die Temperatur der Brennkraftmaschine mit innerer Verbrennung gleich zu oder höher als die gegebene Temperatur ist, und
wobei die Reihenfolge der Beträge von Einlassluft pro Zeiteinheit ist, vom niedrigsten zum höchsten, der Betrag von Einlassluft pro Zeiteinheit vor dem Starten der Brennkraftmaschine mit innerer Verbrennung, der Betrag von Einlassluft pro Zeiteinheit, wenn die Brennkraftmaschine mit innerer Verbrennung im Leerlauf ist und die Temperatur der Brennkraftmaschine mit innerer Verbrennung gleich zu oder höher als die gegebene Temperatur ist, und der Betrag von Einlassluft pro Zeiteinheit, wenn die Brennkraftmaschine mit innerer Verbrennung im Leerlauf ist und die Temperatur der Brennkraftmaschine mit innerer Verbrennung niedriger als die gegebene Temperatur ist, wobei
ein Abschnitt des ersten Umgehungs-Durchgangs (136A, 236A) und ein Abschnitt des zweiten Umgehungs-Durchgangs (136B, 236B) einen gemeinsamen Durchgang (140, 240) bilden,
wobei der erste Umgehungs-Durchgang (136A, 236A) einen ersten unabhängigen Durchgang (139A, 239A) umfasst, der kontinuierlich mit dem gemeinsamen Durchgang (140, 240) ist,
wobei der zweite Umgehungs-Durchgang (136B, 236B) einen zweiten unabhängigen Durchgang (139B, 239B) umfasst, der kontinuierlich mit dem gemeinsamen Durchgang (140, 240) ist,
wobei ein erster Durchgangs-Anschluss (137A, 237A) zwischen dem gemeinsamen Durchgang (140, 240) und dem ersten unabhängigen Durchgang (139A, 239A) vorgesehen ist, ein zweiter Durchgangs-Anschluss (137B, 237B) zwischen dem gemeinsamen Durchgang (1409, 240) und dem zweiten unabhängigen Durchgang (139B, 239B) vorgesehen ist, und ein dritter Durchgangs-Anschluss (137C, 237C) zwischen dem gemeinsamen Durchgang (140, 240) und dem Haupt-Durchgang (134, 234) vorgesehen ist,
wobei die Ventilvorrichtung (156, 256) ein gemeinsames Ventil (145, 245) umfasst, das in der Lage ist, den ersten Durchgangs-Anschluss (137A, 237A) und den dritten Durchgangs-Anschluss (137C, 237C) zu öffnen und zu schließen,
wobei der dritte Durchgangs-Anschluss (137C, 237C) durch das gemeinsame Ventil (145, 245), vor dem Start der Brennkraftmaschine mit innerer Verbrennung, geschlossen ist oder intermittierend geöffnet ist,
wobei jeder von dem ersten Durchgangs-Anschluss (137A, 127A und dem dritten Durchgangs-Anschluss 137C, 137C) wiederholt durch das gemeinsame Ventil (145, 245) geöffnet und geschlossen ist, wenn die Brennkraftmaschine mit innerer Verbrennung im Leerlauf ist und die Temperatur der Brennkraftmaschine mit innerer Verbrennung niedriger als die gegebene Temperatur ist, und
wobei der erste Durchgangs-Anschluss (137A, 237A) geschlossen ist und der dritte Durchgangs-Anschluss (137C, 237C) geöffnet ist durch das gemeinsame Ventil (145, 245), wenn die Brennkraftmaschine mit innerer Verbrennung im Leerlauf ist und die Temperatur der Brennkraftmaschine mit innerer Verbrennung gleich oder höher als die gegebene Temperatur ist.

2. Eine Brennkraftmaschine mit innerer Verbrennung gemäß Anspruch 1, wobei das gemeinsame Ventil (145, 245) ein Solenoidventil umfasst.

3. Eine Brennkraftmaschine mit innerer Verbrennung gemäß Anspruch 2, wobei das gemeinsame Ventil (245) ein Solionidventil, das in mehrfachen Schritten betreibbar ist, umfasst.

4. Eine Brennkraftmaschine mit innerer Verbrennung gemäß zumindest einem der Ansprüche 1 bis 3, wobei die Ventilvorrichtung (156, 256) konfiguriert ist, um einen Betrag von Luft, der durch den ersten Umgehungs-Durchgang (136A, 236A) pro Zeiteinheit strömt, und einen Betrag von Luft, der durch den zweiten Umgehungs-Durchgang (136B, 136D) pro Zeiteinheit strömt, unterschiedlich voneinander zu setzen.

5. Eine Brennkraftmaschine mit innerer Verbrennung gemäß zumindest einem der Ansprüche 1 bis 4, wobei einer von den ersten und zweiten Umgehungs-Durchgängen (136A, 236A, 136B, 236B), der geöffnet ist, wenn die Brennkraftmaschine mit innerer Verbrennung im Leerlauf ist und die Temperatur der Brennkraftmaschine mit innerer Verbrennung gleich oder höher als die gegebene Temperatur ist, mit einem Strömungs-Beschränker (135, 235) vorgesehen ist, der in der Lage ist, einen Betrag von Luft, der durch den einen von den ersten und zweiten Umgehungs-Durchgängen (136A, 236A, 136B, 236B) strömt, einzustellen.

6. Eine Brennkraftmaschine mit innerer Verbrennung gemäß zumindest einem der Ansprüche 1 bis 5, wobei die Brennkraftmaschine mit innerer Verbrennung weiterhin einen Drossel-Körper (155, 255) umfasst, welcher den Haupt-Durchgang (1345, 234), in dem das Haupt-Ventil (154, 254) vorgesehen ist, bildet, und
wobei der Drossel-Körper (155, 255) und zumindest einer von den ersten und zweiten Umgehungs-Durchgängen (136A, 236A, 136B, 236B) getrennte Komponenten sind.

7. Eine Brennkraftmaschine mit innerer Verbrennung gemäß zumindest einem der Ansprüche 1 bis 6, wobei die Maschine angepasst ist, um Kraftstoff zu verwenden, der Alkohol enthält.

8. Eine Brennkraftmaschine mit innerer Verbrennung gemäß zumindest einem der Ansprüche 1 bis 7, wobei die Brennkraftmaschine mit innerer Verbrennung eine EinZylinder-Brennkraftmaschine mit innerer Verbrennung ist.

9. Ein Spreiz-Sitz-Typ-Fahrzeug, das die Brennkraftmaschine mit innerer Verbrennung gemäß zumindest einem von den Ansprüchen 1 bis 8 umfasst.

## Revendications

1. Moteur à combustion interne comprenant un passage d'admission (130.230) à travers lequel l'air est introduit dans une chambre de combustion (25), le passage d'admission (130, 230) comprend:
un passage principal (134, 234) dans lequel est prévue une soupape principale (154, 254); et un premier passage de dérivation (136A.236A) à travers lequel des zones du passage principal (134, 234) situées en amont et en aval de la soupape principale (154, 254) communiquent l'une avec l'autre,
dans lequel le passage d'admission (130, 230) comprend en outre un deuxième passage de dérivation (136B, 236B) à travers lequel des zones du passage principal (134, 234) situées en amont et en aval de la soupape principale (154, 254) communiquent l'une avec l'autre, dans lequel
le moteur à combustion interne comprend en outre un dispositif de soupape (156, 256) capable d'ouvrir et de fermer le premier et le deuxième passages de dérivation (136A, 236A, 136B, 236B), dans lequel
à la fois le premier et le deuxième passages de dérivation (136A, 236A, 136B, 236B) sont fermés ou au moins ouverts par intermittence par le dispositif de soupape (156, 256) avant le démarrage du moteur à combustion interne,
dans lequel chacun du premier et du deuxième passages de dérivation (136A, 236A, 136B, 236B) est ouvert au moins par intermittence par le dispositif de soupape (156, 256) lorsque le moteur à combustion interne est au ralenti et une température du moteur à combustion interne est inférieure à une température donnée,
dans lequel l'un du premier et du deuxième passages de dérivation (136A, 236A, 136B, 236B) est fermé et l'autre du premier et du deuxième passages de dérivation (136A, 236A, 136B, 236B) est ouvert par le dispositif de soupape (156, 256) lorsque le moteur à combustion interne tourne au ralenti et la température du moteur à combustion interne est supérieure ou égale à la température donnée, et
dans lequel l'ordre des quantités d'air d'admission par unité de temps, de la plus faible à la plus élevée, est la quantité d'air d'admission par unité de temps avant le démarrage du moteur à combustion interne, la quantité d'air d'admission par unité de temps lorsque le moteur à combustion interne est au ralenti et la température du moteur à combustion interne est supérieure ou égale à la température donnée et la quantité d'air d'admission par unité de temps lorsque le moteur à combustion interne est au ralenti et la température du moteur à combustion interne est inférieure à la température donnée, dans lequel
une partie du premier passage de dérivation (136A.236A) et une partie du deuxième passage de dérivation (136B, 236B) constituent un passage commun (140, 240),
dans lequel le premier passage de dérivation (136A, 236A) comprend un premier passage indépendant (139A, 239A) continu avec le passage commun (140, 240),
dans lequel le deuxième passage de dérivation (136B, 236B) comprend un deuxième passage indépendant (139B, 239B) continu avec le passage commun (140, 240),
dans lequel un premier orifice de passage (137A, 237A) est prévu entre le passage commun (140, 240) et le premier passage indépendant (139A, 239A), un deuxième orifice de passage (137B, 237B) est prévu entre le passage commun (140, 240) et le deuxième passage indépendant (139B, 239B), et un troisième orifice de passage (137C, 237C) est prévu entre le passage commun (140, 240) et le passage principal (134, 234),
dans lequel le dispositif de soupape (156, 256) comprend une soupape commune (145, 245) capable d'ouvrir et fermer le premier orifice de passage (137A, 237A) et le troisième orifice de passage (137C, 237C),
dans lequel le troisième orifice de passage (137C, 237C) est fermé ou au moins ouvert par intermittence par le dispositif de soupape (156, 256) avant le démarrage du moteur à combustion interne,
dans lequel chacun du premier orifice de passage (137A, 237A) et du troisième orifice ce passage (137C, 237C) est ouvert et fermé de façon répétée par le dispositif de soupape (145, 245) lorsque le moteur à combustion interne est au ralenti et la température du moteur à combustion interne est inférieure à la température donnée, et
dans lequel le premier orifice de passage (137A, 237A) est fermé et le troisième orifice de passage (137C, 237C) est ouvert par la soupape commune (145, 245) lorsque le moteur à combustion interne est au ralenti et la température du moteur à combustion interne est supérieure ou égale à la température donnée.

2. Moteur à combustion interne selon la revendication 1, dans lequel la soupape commune (145, 245) comprend une électrovanne.

3. Moteur à combustion interne selon la revendication 2, dans lequel la soupape commune (245) comprend une électrovanne pilotable en multiples phases.

4. Moteur à combustion interne selon au moins l'une des revendications 1 à 3, dans lequel le dispositif de soupape (156, 256) est configuré pour régler une quantité d'air s'écoulant à travers le premier passage de dérivation (136A, 236A) par unité de temps et une quantité d'air traversant le deuxième passage de dérivation (136B, 236B) par unité de temps différente l'une de l'autre.

5. Moteur à combustion interne selon au moins l'une des revendications 1 à 4, dans lequel l'un du premier et du deuxième passages de dérivation (136A, 236A, 136B, 236B), qui est ouvert lorsque le moteur à combustion interne est au ralenti et que la température du moteur à combustion interne est supérieure ou égale à la température donnée, est muni d'un limiteur d'écoulement (135, 235) capable d'ajuster une quantité d'air s'écoulant dans l'un du premier et du deuxième passages de dérivation (136A, 236A, 136B, 236B).

6. Moteur à combustion interne selon au moins l'une des revendications 1 à 5, dans lequel le moteur à combustion interne comprend en outre un boîtier papillon (155, 255) qui constitue le passage principal (134, 234) dans lequel la soupape principale (154, 254) est prévue, et
dans lequel le boîtier papillon (155, 255) et au moins l'un du premier et du deuxième passages de dérivations (136A, 236A, 136B, 236B) sont des composants séparés.

7. Moteur à combustion interne selon au moins l'une des revendications 1 à 6, dans lequel le moteur est adapté pour utiliser du carburant contenant de l'alcool.

8. Moteur à combustion interne selon au moins l'une des revendications 1 à 7, dans lequel le moteur à combustion interne est un moteur à combustion interne à un seul cylindre.

9. Véhicule de type à selle comprenant le moteur à combustion interne selon au moins l'une des revendications 1 à 8.
